# EUROPEAN PATENT APPLICATION

(11) **EP 3 806 010 A1**
(43) Date of publication of application: **14.04.2021**
(21) Application number: 18917925.2
(22) Date of filing: 19.09.2018
(51) Int. Cl.: G06Q 10/06

(54) **AUDIT SUPPORT SYSTEM, AUDIT SUPPORT SERVER DEVICE, AUDIT SUPPORT TERMINAL, AUDIT SUPPORT PROGRAM, AND AUDIT SUPPORT METHOD**

(30) Priority: 10.05.2018 WO PCT/JP2018/018186
(71) Applicant: MITSUBISHI CHEMICAL CORPORATION, Tokyo 100-8251 (JP)
(72) Inventor: SHOUDA, Norihiro, Tokyo 100-8251 (JP)
(74) Representative: Hoffmann Eitle
(86) International application number: PCT/JP2018/034627
(87) International publication number: WO 2019/215940

(57) **Abstract**

An embodiment of the present invention supports an audit activity more appropriately.

An internal audit support system includes: a terminal relating to a first division that undergoes an internal audit, a terminal relating to a first audit division that performs the internal audit of the first division, and a main system that connects to the terminal relating to the first division and the terminal relating to the first audit division through a network, in which the terminal relating to the first division includes a display unit that displays the item relating to the internal audit, and an input unit that inputs information about suitability for the item, and the main system includes a storage unit that stores the information in association with the item, and a first determination unit that determines one of a plurality of indicators indicating a degree of control for a major item including one or a plurality of items by using the information, and the terminal relating to the first audit division includes a display unit that displays the one determined indicator.

## Description

### Technical Field

Technologies disclosed in this application relate to an audit support system, an audit support server device, an audit support terminal, an audit support program, or an audit support method.

### Background Art

In recent years, there has been increasing interest in internal control, and certain companies need to take appropriate measures on an audit of COSO (Committee of Sponsoring Organizations of Treadway Committees), J-SOX, or the like. The following technologies have been proposed as technologies for supporting an audit.

### Citation List

### Patent Literature

Patent Literature 1: JP 2002-373245 A
Patent Literature 2: JP 2010-250738 A
Patent Literature 3: JP 2003-150672 A

### Summary of Invention

### Technical Problem

However, each of the above-mentioned prior arts has not been able to appropriately support an audit that each company needs to cope with.

Various embodiments of the present invention provide an audit support system, an audit support server device, an audit support terminal, an audit support program, or an audit support method.

### Solution to Problem

A first embodiment which is an embodiment of the present invention relates to an internal audit support system, including: a terminal that relates to a first division that undergoes an internal audit; a terminal that relates to a first audit division performing the internal audit of the first division; and a main system that is connectable to the terminal relating to the first division and the terminal relating to the first audit division through a network, in which the terminal relating to the first division includes a display unit that displays an item relating to the internal audit, and an input unit that inputs information about suitability for the item, and the main system includes a storage unit that stores the information in association with the item, and a first determination unit that determines one of a plurality of indicators indicating a degree of control for a major item including one or more of the above items by using the information, and the terminal relating to the first audit division includes a display unit that displays the determined one indicator.

A second embodiment which is an embodiment of the present invention relates to the internal audit support system according to the first embodiment, in which the first audit division belongs to a first group, the first division belongs to a second group, and the first group is a group that controls a decision-making body of the second group.

A third embodiment which is an embodiment of the present invention relates to the internal audit support system according to the first or second embodiment, in which the main system includes a first judgment unit that judges suitability for a first item by using information about suitability for a first sub-item which is a sub-item of the first item relating to the internal audit, and the first judgment unit judges suitability for a second item different from the first item by using the information about the suitability for the first sub-item.

A fourth embodiment which is an embodiment of the present invention relates to the internal audit support system according to any one of the first to third embodiment, in which the first audit division belongs to the first group, and a display unit of the terminal relating to the first audit division displays information about a controlled group having a decision-making body that is controlled by the first group while ranking the controlled group.

A fifth embodiment which is an embodiment of the present invention relates to the internal audit support system according to any one of the first to fourth embodiments, in which the first audit division belongs to the first group, and the display unit of the terminal relating to the first audit division displays statistical information about the controlled group having the decision-making body that is controlled by the first group.

A sixth embodiment which is an embodiment of the present invention relates to the internal audit support system according to any one of the first to fifth embodiments, in which the first division and the first audit division belong to the first group, the main system includes a calculation unit that calculates a control risk calculated by using the information about suitability for the item relating to the internal audit, a frequency, and an influence degree, and the display unit of the terminal relating to the first audit division displays the control risk.

A seventh embodiment which is an embodiment of the present invention relates to the internal audit support system according to any one of the first to sixth embodiments, in which the first audit division belongs to the first group, and when the group having the decision-making body that is controlled by the first group is a third group, the terminal relating to the first audit division displays the statistical information about a group having the decision-making body that is controlled by the third group.

An eighth embodiment which is an embodiment of the present invention relates to the internal audit support system according to any one of the first to seventh embodiments, in which the second audit division performs an audit on the first division, and the terminal relating to the second audit division is connected to the main system through the network, and includes a display unit that displays the information stored in a storage unit, unlike the terminal relating to the first audit division.

A ninth embodiment which is an embodiment of the present invention relates to the internal audit support system according to any one of the first to eighth embodiments, in which when the item relating to the internal audit changes, the display unit of the terminal relating to the first division displays information about the change.

A tenth embodiment which is an embodiment of the present invention relates to the internal audit support system according to any one of the first to ninth embodiment, in which the main system includes a second judgment unit that judges whether to acquire information about suitability relating to the change, and when the second judgment unit judges that the information about the suitability relating to the change is not acquired at a predetermined time point, the display unit of the terminal relating to the first division displays information indicating that the information about the suitability relating to the change is not acquired.

An eleventh embodiment which is an embodiment of the present invention relates to the internal audit support system according to any one of the first to tenth embodiments, in which the main system includes the second judgment unit that judges whether to acquire the information about suitability relating to the change, and when the second judgment unit judges that the information about the suitability relating to the change is not acquired at the predetermined time point, the display unit of the terminal relating to the first audit division displays that the information about the suitability relating to the change is not acquired.

A twelfth embodiment which is an embodiment of the present invention relates to the internal audit support system according to any one of the first to eleventh embodiments, in which the first audit division belongs to the first group, and the main system includes the second judgment unit that judges whether to acquire the information about the suitability relating to the change, for each group having a decision-making body that is controlled by the first group, the display unit of the terminal relating to the first audit division displays information about the judgment for each group having the decision-making body that is controlled by the first group.

A thirteenth embodiment which is an embodiment of the present invention relates to the internal audit support system according to any one of the first to twelfth embodiments, in which the main system has a specification unit that specifies information about suitability for an item relating to an internal audit acquired after a predetermined time point, and the display unit of the terminal relating to the first audit division displays the specified information.

A fourteenth embodiment which is an embodiment of the present invention relates to the internal audit support system according to the first or thirteenth embodiments, in which the main system includes a specification unit that specifies information about suitability for an item required to pass the audit which is the information about suitability for the item relating to the internal audit acquired after a predetermined time point, and the display unit of the terminal relating to the first audit division displays the specified information.

A fifteenth embodiment which is an embodiment of the present invention relates to the internal audit support system according to any one of the first to fourteenth embodiments, in which the main system includes a specification unit that specifies information about suitability for an item that affects a change in one level of a principle or an operation which is the information about suitability for the item relating to the internal audit acquired after a predetermined time point, and the display unit of the terminal relating to the first audit division displays the specified information.

A sixteenth embodiment which is an embodiment of the present invention relates to an internal audit support system, including: a first transmitting unit that transmits information for displaying an item relating to an internal audit to a terminal relating to a first division that undergoes an internal audit; a first receiving unit that receives information about suitability for the item from a terminal relating to the first division; a storage unit that stores the information in association with the item, and a first determination unit that determines one of a plurality of indicators indicating a degree of control for a major item including one or more of the above items by using the information; and a second transmitting unit that transmits information for displaying the determined one indicator to the terminal relating to a first audit division performing the internal audit of the first division.

A seventeenth embodiment which is an embodiment of the present invention relates to the internal audit support system according to the sixteenth embodiment, in which the first audit division belongs to the first group, and the first division belongs to a second group, and the first group is a group which controls a decision-making body of the second group.

An eighteenth embodiment which is an embodiment of the present invention relates to the internal audit support system according to the seventeenth or eighteenth embodiment, in which the internal audit support system further includes: a first judgment unit that judges suitability for a first item by using information about suitability for a first sub-item which is a sub-item of the first item relating to the internal audit, and the first judgment unit judges suitability for a second item different from the first item by using the information about the suitability for the first sub-item.

A nineteenth embodiment which is an embodiment of the present invention relates to the internal audit support system according to any one of the sixteenth to eighteenth embodiments, in which the first audit division belongs to the first group, and the second transmitting unit transmits information for displaying a controlled group having a decision-making body that is controlled by the first group by ranking the controlled group to the terminal relating to the first audit division.

A twentieth embodiment which is an embodiment of the present invention relates to the internal audit support system according to any one of the sixteenth to nineteenth embodiments, in which the first audit division belongs to the first group, and the second transmitting unit transmits statistical information about the controlled group having the decision-making body that is controlled by the first group to the terminal relating to the first audit division.

A twenty-first embodiment which is an embodiment of the present invention relates to the internal audit support system according to any one of the sixteenth to twentieth embodiments, in which the first division and the first audit division belong to the first group, the internal audit support system further includes a calculation unit that calculates a control risk calculated by using the information about suitability for the item relating to the internal audit, a frequency, and an influence degree, and the second transmitting unit transmits the control risk to the terminal relating to the first audit division.

A twenty-second embodiment which is an embodiment of the present invention relates to the internal audit support system according to any one of the sixteenth to twenty-first embodiments, in which the first audit division belongs to the first group, and when the group having the decision-making body that is controlled by the first group is a third group, the second transmitting unit transmits statistical information about a group having a decision-making body that is controlled by the third group to the terminal relating to the first audit division.

A twenty-third embodiment which is an embodiment of the present invention relates to the internal audit support system according to any one of the sixteenth to twenty-second embodiments, in which the second audit division performs an audit on the first division, and the internal audit support system further includes a third transmitting unit that transmits the information stored in the storage unit to a terminal relating to the second audit division different from the terminal relating to the first audit division.

A twenty-fourth embodiment which is an embodiment of the present invention relates to the internal audit support system according to the sixteenth to twenty-third embodiments, in which when the item relating to the internal audit changes, the first transmitting unit transmits the information about the change to the terminal relating to the first division.

A twenty-fifth embodiment which is an embodiment of the present invention relates to the internal audit support system according to any one of the sixteenth to twenty-fourth embodiments, in which the internal audit support system includes a second judgment unit that judges whether to acquire information relating to suitability relating to the change, and when the second judgment unit judges that the information about the suitability relating to the change is not acquired at a predetermined time point, the first transmitting unit transmits information indicating that the information about the suitability relating to the change is not acquired to the terminal relating to the first division.

A twenty-sixth embodiment which is an embodiment of the present invention relates to the internal audit support system according to any one of the sixteenth to twenty-fifth embodiments, in which the internal audit support system further includes: a second judgment unit that judges whether to acquire information relating to suitability relating to the change, and when the second judgment unit judges that the information about the suitability relating to the change is not acquired at a predetermined time point, the second transmitting unit transmits information indicating that the information about the suitability relating to the change is not acquired to the terminal relating to the first audit division.

A twenty-seventh embodiment which is an embodiment of the present invention relates to the internal audit support system according to any one of the sixteenth to twenty-sixth embodiments, in which the first audit division belongs to the first group, and the internal audit support system further includes a second judgment unit that judges whether to acquire the information about the suitability relating to the change, for each group having the decision-making body that is controlled by the first group, the second transmitting unit transmits information about the judgment that is displayed for each group having the decision-making body that is controlled by the first group to the terminal relating to the first audit division.

A twenty-eighth embodiment which is an embodiment of the present invention relates to the internal audit support system according to any one of the sixteenth to twenty-seventh embodiments, in which the internal audit support system further includes: a specification unit that specifies information about suitability for an item relating to an internal audit acquired after a predetermined time point, and the second transmitting unit transmits the specified information to the terminal relating to the first audit division.

A twenty-ninth embodiment which is an embodiment of the present invention relates to the internal audit support system according to any one of the sixteenth to twenty-eighth embodiments, in which the internal audit support system further includes: a specification unit that specifies information about suitability for an item required to pass the audit which is the information about suitability for the item relating to the internal audit acquired after a predetermined time point, and the second transmitting unit transmits the specified information to the terminal relating to the first audit division.

A thirtieth embodiment which is an embodiment of the present invention relates to the internal audit support system according to any one of the sixteenth to twenty-ninth embodiments, in which the internal audit support system further includes: a specification unit that specifies information about suitability for an item that affects a change in one level of a principle or an operation which is the information about suitability for the item relating to the internal audit acquired after a predetermined time point, and the second transmitting unit transmits the specified information to the terminal relating to the first audit division.

A thirty-first embodiment which is an embodiment of the present invention relates to an internal audit support method in an internal audit support system including a terminal that relates to a first division that undergoes an internal audit; a terminal that relates to a first audit division performing the internal audit of the first division; and a main system that is connectable to the terminal relating to the first division and the terminal relating to the first audit division through a network, the internal audit support method including: by the terminal relating to the first division, a step of displaying an item relating to the internal audit, and a step of receiving information about suitability for the item, by the main system, a step of storing the information in association with the item, and a step of determining one of a plurality of indicators indicating a degree of control for a major item including one or more of the items by using the information, and, by the terminal relating to the first audit division, a step of displaying the determined one indicator.

A thirty-second embodiment which is an embodiment of the present invention relates to the internal audit support method according to the thirty-first embodiment, in which the first audit division belongs to the first group, and the first division belongs to a second group, and the first group is a group which controls a decision-making body of the second group.

A thirty-third embodiment which is an embodiment of the present invention relates to the internal audit support method according to the thirty-first or thirty-second embodiment, in which the internal audit support method further includes: by the main system, a step of using information about suitability for a first sub-item which is a sub-item of a first item when judging the suitability for the first item relating to an internal audit; and a step of using the information about the suitability for the first sub-item when judging suitability for a second item different from the first item.

A thirty-fourth embodiment which is an embodiment of the present invention relates to the internal audit support method according to any one of the thirty-first to thirty-third embodiments, in which the first audit division belongs to the first group, and the internal audit support method further includes a step of displaying, by the terminal relating to the first audit division, information about a controlled group having a decision-making body that is controlled by the first group by ranking the controlled group.

A thirty-fifth embodiment which is an embodiment of the present invention relates to the internal audit support method according to any one of the thirty-first to thirty-fourth embodiments, in which the first audit division belongs to the first group, and the internal audit support method further includes a step of displaying, by the terminal relating to the first audit division, statistical information about the controlled group having the decision-making body that is controlled by the first group.

A thirty-sixth embodiment which is an embodiment of the present invention relates to the internal audit support method according to any one of the thirty-first to thirty-fifth embodiments, in which the first division and the first audit division belong to the first group, and the internal audit support method further includes a step of calculating, by the main system, a control risk calculated by using the information about suitability for the item relating to the internal audit, a frequency, and an influence degree, and a step of displaying, by the terminal relating to the first audit division, the control risk.

A thirty-seventh embodiment which is an embodiment of the present invention relates to the internal audit support method according to any one of the thirty-first to thirty-sixth embodiments, in which the first audit division belongs to the first group, and the internal audit supply method further includes a step of displaying, by the terminal relating to the first audit division, the statistical information about the group having the decision-making body that is controlled by the third group when the group having the decision-making body that is controlled by the first group is a third group.

A thirty-eighth embodiment which is an embodiment of the present invention relates to the internal audit support method according to the thirty-first or thirty-seventh embodiments, in which the second audit division performs an audit on the first division, and the internal audit support method further includes a step of displaying, by the terminal relating to the second audit division different from the terminal relating to the first audit division, the information stored in the storage unit.

A thirty-ninth embodiment which is an embodiment of the present invention relates to the internal audit support method according to any one of the thirty-first to thirty-eighth embodiment, in which the internal audit support method further includes a step of displaying, by the terminal relating to the first division, information about change when the items relating to the internal audit are changed.

A fortieth embodiment which is an embodiment of the present invention relates to the internal audit support method according to any one of the thirty-first to thirty-ninth embodiments, in which the internal audit support method further includes: a step of judging, by the main system, whether to acquire the information about the suitability relating to the change; and a step of displaying, by the terminal relating to the first division, the information indicating that the information about the suitability relating to the change is not acquired when it is judged that the information about the suitability relating to the change is not acquired at a predetermined time point.

A forty-first embodiment which is an embodiment of the present invention relates to the internal audit support method according to any one of the thirty-first to fortieth embodiments, in which the internal audit support method further includes: a step of judging, by the main system, whether to acquire the information about the suitability relating to the change; and a step of displaying, by the terminal relating to the first division, that the information about the suitability relating to the change is not acquired when it is judged that the information about the suitability relating to the change is not acquired at a predetermined time point.

A forty-second embodiment which is an embodiment of the present invention relates to the internal audit support method according to any one of the thirty-first to forty-first embodiments, in which the first audit division belongs to the first group, and the internal audit support method further includes: a step of judging, by the main system, whether to acquire the information about the suitability relating to the change, for each group having a decision-making body that is controlled by the first group, and a step of displaying, by the terminal relating to the first audit division, the information about the judgment for each group having the decision-making body that is controlled by the first group.

A forty-third embodiment which is an embodiment of the present invention relates to the internal audit support method according to any one of the thirty-first to forty-second embodiments, in which the internal audit support method further includes: a step of specifying, by the main system, information about suitability for an item relating to an internal audit acquired after a predetermined time point; and a step of displaying, by the display unit of the terminal relating to the first audit division, the specified information.

A forty-fourth embodiment which is an embodiment of the present invention relates to the internal audit support method according to any one of the thirty-first to forty-third embodiments, in which the internal audit support method further includes: a step of specifying, by the main system, information about suitability for an item required to pass the audit which is the information about suitability for the item relating to the internal audit acquired after a predetermined time point; and a step of displaying, by the terminal relating to the first audit division, the specified information.

A forty-fifth embodiment which is an embodiment of the present invention relates to the internal audit support method according to any one of the thirty-first to forty-fourth embodiments, in which the internal audit support method further includes: a step of specifying, by the main system, information about suitability for an item that affects a change in one level of a principle or an operation which is the information about suitability for the item relating to the internal audit acquired after a predetermined time point; and a step of displaying, by the terminal relating to the first audit division, the specified information.

A forty-sixth embodiment which is an embodiment of the present invention relates to a program causing a computer to function as the system according to any one of the first to thirtieth embodiments.

The first division and the first audit division may belong to the same group or different groups. When the first division and the first audit division belong to different groups, the first audit division may belong to the first group and the first division may belong to the second group.

In addition, the second audit division may belong to the same group as the group belonging to the first division, or may belong to a group different from the group to which the first division belongs.

The first group may directly or indirectly control the decision-making body of the second group. Indirectly, for example, the first group may directly control the decision-making body of the third group, and the third group may directly control the decision-making body of the second group.

The number of controlled groups having the decision-making body that can be controlled by the first group may be plural. The information relating to the controlled group may be, for example, the information indicating the controlled group such as a name or an abbreviation of the controlled group, and/or the audit result relating to the control group such as a total score of the controlled group and one level relating to one or more of each principle/operation.

As an example of ranking, for example, one or more levels of each principle/operation may be displayed from the bottom, the one or more levels of each principle/operation may be displayed from the top, the total score of the audit result may be displayed from the top, the total score of the audit result may be displayed from the bottom, and so on. In addition, the display may be displayed for all of the controlled groups, or may be displayed for some of the controlled groups. For example, a predetermined number of controlled groups may be displayed in order of rank.

The statistical information may relate to the audit result relating to the controlled group. Further, the statistical information may be numerical information or a chart. The numerical information may be a comprehensive evaluation of the controlled group or one level of each principle/operation. In addition, the numerical information may be the comprehensive evaluation of each controlled group, a median value, a mode value, a representative value, a geometric mean, an arithmetic mean, a harmonic mean, a weighted mean, a trimmed mean, or a Winsorized mean, of one level of each principle/operation, or the like. In addition, the chart may be, for example, a circle graph, a band graph, a bar graph, a polygonal line graph, and the like which are classified by the comprehensive evaluation of each controlled group, and a circle graph, a band graph, a bar graph, a polygonal line graph, and the like which are classified by the level of each controlled group for each principle/operation.

Examples of the configuration in which the terminal relating to the second audit division which is different from the terminal relating to the first audit division can display the information stored in the storage unit may include, for example, a configuration in which information A on the suitability for the item relating to the internal audit is input from the input unit of the terminal relating to the first division, and as a result, when the information A on the suitability is recorded in the storage unit of the main system, the display unit of the terminal relating to the first audit division can display the information A, and the display unit of the terminal relating to the second audit division can also display the information A.

The information for displaying the controlled group by ranking the controlled group, which is transmitted to the terminal, may be information that can display the controlled group by ranking the controlled group. For example, the information may be a list of information indicating the controlled group using a format that implicitly indicates the ranking, or may be list information in which a score such as the ranking or the total score for calculating the ranking is associated with the controlled group.

An embodiment of the present invention relates to an audit support system that includes a first presentation unit that presents an item relating to an audit, a reception unit that receives information about suitability for the item, and a storage unit that associates and stores the information and the item.

An embodiment of the present invention relates to an audit support system that includes a first determination unit that determines one of a plurality of indicators indicating a degree of control for each major item including one or more of the items, and a second presentation unit that presents the determined one indicator.

An embodiment of the present invention relates to an audit support system in which the second presentation unit includes a first input unit that can input one of the plurality of indicators indicating the degree of control and the related information for each major item.

An embodiment of the present invention relates to the audit support system in which the second presentation unit includes a second input unit that is different from the first input unit that can input one of the plurality of indicators indicating the degree of control and the related information for each major item.

An embodiment of the present invention relates to the audit support system in which the major item includes one or more medium items, and the first determination unit determines the one indicator according to the information about suitability for the one or more medium items.

An embodiment of the present invention relates to the audit support system in which one indicator indicating the degree of control is preset for one item relating to the audit.

An embodiment of the present invention relates to the audit support system in which the major item is the maintenance or operation of one principle of COSO, and one indicator indicating the degree of control in the maintenance and one indicator indicating the degree of control in the operation are determined separately.

An embodiment of the present invention relates to an audit support system that includes a second determination unit that determines a suitability indicator of an audit of a company among the plurality of indicators indicating the degree of control by using attributes of the company.

An embodiment of the present invention relates to the audit support system in which when the information about suitability for the first item relating to the audit may be first information and the information about suitability for the second item relating to the audit may be second information, the reception unit uses the association in which the first item or the first information is associated with the second item or the second information to treat the first information as the second information when receiving the first information corresponding to the first item.

An embodiment of the present invention relates to an audit support server device that includes a first transmitting unit that transmits an item relating to an audit for presenting the item, a reception unit that receives information about suitability for the item, and a storage unit that associates and stores the information and the item.

An embodiment of the present invention relates to an audit support server device that includes a first determination unit that determines one of a plurality of indicators indicating a degree of control for a major item including one or more of the items by using the information, and a second transmitting unit that transmits the determined one indicator for presenting the indicator.

An embodiment of the present invention relates to an audit support server device that includes a first input unit that can input one of the plurality of indicators indicating the degree of control and the related information, for the major item.

An embodiment of the present invention relates to an audit support server device that includes a second input unit that is different from the first input unit that can input one of the plurality of indicators indicating the degree of control and the related information, for the major item.

An embodiment of the present invention relates to the audit support server device in which the major item includes one or more medium items, and the first determination unit determines the one indicator according to the information about suitability for the one or more medium items.

An embodiment of the present invention relates to the audit support server device in which one indicator indicating the degree of control is preset for one item relating to the audit.

An embodiment of the present invention relates to the audit support server device in which the major item is the maintenance or operation of one principle of COSO, and one indicator indicating the degree of control in the maintenance and one indicator indicating the degree of control in the operation are determined separately.

An embodiment of the present invention relates to an audit support server device that includes a second determination unit that determines a suitability indicator of an audit of a company among a plurality of indicators indicating a degree of control by using attributes of the company.

An embodiment of the present invention relates to the audit support server device in which when the information about suitability for the first item relating to the audit may be first information and the information about suitability for the second item relating to the audit may be second information, the reception unit uses the association in which the first item or the first information is associated with the second item or the second information to treat the first information as the second information when receiving the first information corresponding to the first item.

An embodiment of the present invention relates to an audit support terminal device that includes a first presentation unit that presents an item relating to an audit, a reception unit that receives information about suitability for the item, and a transmitting unit that associates and stores the information and the item and transmits the associated and stored information and item to the server.

An embodiment of the present invention relates to an audit support terminal device that includes a second presentation unit that uses the information to present one of a plurality of indicators indicating a degree of control for a major item including one or more of the items as the determined one indicator.

An embodiment of the present invention relates to an audit support terminal device in which the second presentation unit includes a first input unit that can input one of the plurality of indicators indicating the degree of control and the related information, for the major item.

An embodiment of the present invention relates to the audit support terminal device in which the second presentation unit includes a second input unit that is different from the first input unit that can input one of the plurality of indicators indicating the degree of control and the related information, for the major item.

An embodiment of the present invention relates to the audit support terminal device in which the major item includes one or more medium items, and the first determination unit determines the one indicator according to the information about suitability for the one or more medium items.

An embodiment of the present invention relates to the audit support terminal device in which one indicator indicating the degree of control is preset for one item relating to the audit.

An embodiment of the present invention relates to the audit support server device in which the major item is the maintenance or operation of one principle of COSO, and one indicator indicating the degree of control in the maintenance and one indicator indicating the degree of control in the operation are determined separately.

An embodiment of the present invention relates to an audit support terminal device that includes a second determination unit that determines a suitability indicator of an audit of a company among the plurality of indicators indicating the degree of control by using attributes of the company.

An embodiment of the present invention relates to the audit support terminal device in which when the information about suitability for the first item relating to the audit may be first information and the information about suitability for the second item relating to the audit may be second information, the reception unit uses the association in which the first item or the first information is associated with the second item or the second information to treat the first information as the second information when receiving the first information corresponding to the first item.

An embodiment of the present invention relates to an audit support method that further includes a first presenting step of presenting an item relating to an audit, a receiving step of receiving information about suitability for the item, and a storing step of associating and storing the information and the item.

An embodiment of the present invention relates to an audit support system that further includes a first determining step of determining one of a plurality of indicators indicating a degree of control for each major item including one or more of the items, and a second presenting step of presenting the determined one indicator.

An embodiment of the present invention relates to the audit support method in which the second presenting step includes a first receiving step of receiving one of the plurality of indicators indicating the degree of control and the related information, for the major item.

An embodiment of the present invention relates to the audit support method in which the second presenting step includes a second receiving step different from a first receiving step of receiving one of the plurality of indicators indicating the degree of control and the related information, for the major item.

An embodiment of the present invention relates to the audit support method in which the major item includes one or more medium items, and the first determining step includes a step of determining the one indicator according to the information about suitability for the one or more medium items.

An embodiment of the present invention relates to the audit support method in which one indicator indicating the degree of control is preset for one item relating to the audit.

An embodiment of the present invention relates to the audit support method in which the major item is the maintenance or operation of one principle of COSO, and the fist determining step includes a step of separately determining one indicator indicating the degree of control in the maintenance and one indicator indicating the degree of control in the operation.

An embodiment of the present invention relates to an audit support method that includes a second determining step of determining a suitability indicator of an audit of a company among the plurality of indicators indicating the degree of control by using attributes of the company.

An embodiment of the present invention relates to the audit support method in which when the information about suitability for the first item relating to the audit may be first information and the information about suitability for the second item relating to the audit may be second information, the receiving step includes a step of using the association in which the first item or the first information is associated with the second item or the second information to treat the first information as the second information when receiving the first information corresponding to the first item.

An embodiment of the present invention relates to an audit support program that causes a computer to operate as a first presentation unit that presents an item relating to an audit, a reception unit that receives information about suitability for the item, and a storage unit that associates and stores the information and the item.

An embodiment of the present invention relates to an audit support program that causes a computer to operate as a first determination unit that determines one of a plurality of indicators indicating a degree of control for a major item including one or more of the items by using the information, and a second presentation unit that presents the determined one indicator.

An embodiment of the present invention relates to the audit support program in which the second presentation unit includes a first input unit that can input one of the plurality of indicators indicating the degree of control and the related information, for the major item.

An embodiment of the present invention relates to the audit support program in which the second presentation unit includes a second input unit that is different from the first input unit that can input one of the plurality of indicators indicating the degree of control and the related information, for the major item.

An embodiment of the present invention relates to the audit support program in which the major item includes one or more medium items, and the first determination unit includes a determination unit that determines the one indicator according to the information about suitability for the one or more medium items.

An embodiment of the present invention relates to the audit support program in which one indicator indicating the degree of control is preset for one item relating to the audit.

An embodiment of the present invention relates to the audit support program in which the major item is the maintenance or operation of one principle of COSO, and the fist determining unit includes a determination unit that separately determines one indicator indicating the degree of control in the maintenance and one indicator indicating the degree of control in the operation.

An embodiment of the present invention relates to the audit support program that causes a computer to operate as a second determination unit that determines a suitability indicator of an audit of a company among the plurality of indicators indicating the degree of control by using attributes of the company.

An embodiment of the present invention relates to the audit support program in which when the information about suitability for the first item relating to the audit may be first information and the information about suitability for the second item relating to the audit may be second information, the audit support program causes a computer to operate as a unit that uses the association in which the first item or the first information is associated with the second item or the second information to treat the first information as the second information when receiving the first information corresponding to the first item.

The audit is an act of determining whether a company's organization and/or operation is appropriate, and includes, but not limited to, audits such as COSO and J-SOX.

The items associated with the audit include, but are not limited to, for example, questions queried in association with the audit and explanations of trails to be collected in association with the audit.

The information about suitability for the item associated with the audit may be information indicating whether there is a trail for the item, a trail for the item, trail data, or a trail data file. The trail improves the certainty that what is to an item is a fact, and includes, but not limited to, regulations, rules, reports, minutes of meetings, or the like.

Treating the first information as the second information means, for example, the configuration that inputs the information about suitability for the second item, the configuration that presents that there is the information about suitability for the second item, the configuration that presents the first item and/or the first information as the information about suitability for the second item, and/or the configuration that associates the first information with the second item and stores the first information, and the like.

The association is an association of at least two items, and may have a function of tracing from one item to other items, such as a rule or a table.

### Advantageous Effects of Invention

The system of an embodiment according to the present invention can more appropriately support the audit activities.

### Brief Description of Drawings

Fig. 1 is a block diagram illustrating a configuration of an information processing apparatus of a system according to an embodiment of the present invention.
Fig. 2 is a block diagram illustrating a configuration of another information processing apparatus of the system according to the embodiment of the present invention.
Fig. 3 is a block diagram illustrating a specific example of a function of a system according to the embodiment of the present invention.
Fig. 4 is an example of a flow of the system according to the embodiment of the present invention.
Fig. 5 is an example of a screen of the system according to the embodiment of the present invention.
Fig. 6 is an example of a data structure/screen of the system according to the embodiment of the present invention.
Fig. 7 is an example of the data structure/screen of the system according to the embodiment of the present invention.
Fig. 8 is an example of the screen of the system according to the embodiment of the present invention.
Fig. 9 is an example of the data structure of the system according to the embodiment of the present invention.
Fig. 10 is an example of the screen of the system according to the embodiment of the present invention.
Fig. 11 is an example of the screen of the system according to the embodiment of the present invention.
Fig. 12 is an example of the screen of the system according to the embodiment of the present invention.
Fig. 13 is an example of the screen of the system according to the embodiment of the present invention.
Fig. 14 is an example of the data structure of the system according to the embodiment of the present invention.
Fig. 15 is an example of the screen of the system according to the embodiment of the present invention.
Fig. 16 is an example of a configuration of the system according to the embodiment of the present invention.
Fig. 17 is an example of the configuration of the system according to the embodiment of the present invention.
Fig. 18 is an example of a flow of the system according to the embodiment of the present invention.
Fig. 19 is an example of a description of document sheet entry according to the system according to the embodiment of the present invention.
Fig. 20 is an example of a description of an assessment sheet according to the system according to an embodiment of the present invention.
Fig. 21 is a block diagram illustrating a configuration example of another information processing apparatus of the system according to the embodiment of the present invention.
Fig. 22 is an example of the screen of the system according to the embodiment of the present invention.
Fig. 23 is an example of the screen of the system according to the embodiment of the present invention.
Fig. 24 is an example of the data structure of the system according to the embodiment of the present invention.
Fig. 25 is an example of the data structure of the system according to the embodiment of the present invention.
Fig. 26 is an example of the screen of the system according to the embodiment of the present invention.
Fig. 27 is an example of the screen of the system according to the embodiment of the present invention.
Fig. 28 is an example of the data structure of the system according to the embodiment of the present invention.
Fig. 29 is an example of the data structure of the system according to the embodiment of the present invention.
Fig. 30 is an example of the screen of the system according to the embodiment of the present invention.
Fig. 31 is an example of the screen of the system according to the embodiment of the present invention.
Fig. 32 is an example of a flow of the system according to the embodiment of the present invention.
Fig. 33 is an example of a flow of the system according to the embodiment of the present invention.
Fig. 34 is an example of the screen of the system according to the embodiment of the present invention.
Fig. 35 is a diagram for describing an example of the system according to the embodiment of the present invention.
Fig. 36 is an example of the screen of the system according to the embodiment of the present invention.
Fig. 37 is an example of the screen of the system according to the embodiment of the present invention.

### Description of Embodiments

Hereinafter, various embodiments of the present invention will be described with reference to the drawings. Note that common components in the drawings are denoted by the same reference numerals.

### 1. Configuration Example of Embodiment

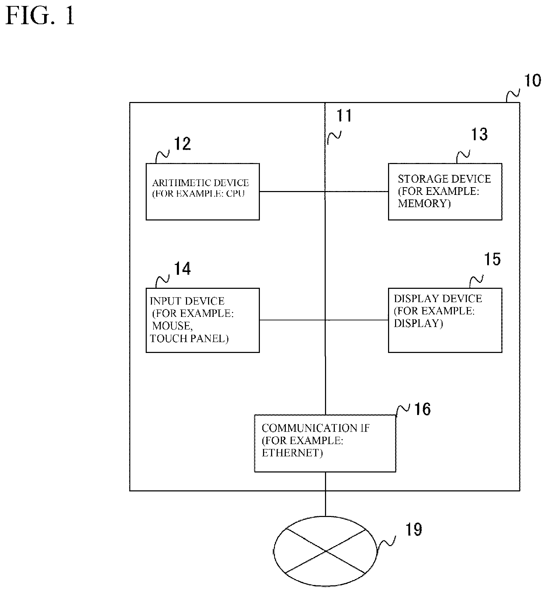

Fig. 1 schematically illustrates an example of a system configuration according to an embodiment of the present invention. The system of this example includes an information processing apparatus 10. As an example of configuring the information processing apparatus 10, as illustrated in Fig. 1, for example, the information processing apparatus 10 may be configured to include a bus 11, an arithmetic device 12, a storage device 13, an input device 14, a display device 15, and a communication IF 16. Further, the information processing apparatus 10 may be configured to be directly or indirectly connected to the network 19.

The bus 11 has a function of transmitting information between the arithmetic device 12, the storage device 13, the input device 14, the display device 15, and/or the communication IF 16.

The arithmetic device 12 is a device capable of executing program instructions. An example of the arithmetic device 12 may include a processor. The arithmetic device 12 may be a CPU or an MPU. In addition, a graphics processing unit may have a digital signal processor, and the like.

The storage device 13 is a device that records information. The storage device 13 may be either an internal memory and/or an external memory. Further, the storage device 13 may be a magnetic disk (hard disk), an optical disk, a magnetic tape, a semiconductor memory, or the like. In addition, although not illustrated, the storage device 13 may be a storage device via a network or a storage device on a cloud via a network.

Note that in the block diagram of Fig. 1, a register, an L1 cache, an L2 cache, and the like that store information at a position close to the arithmetic device may be included in the arithmetic device 12, but in a design of a computer architecture, the storage device 13 may include these components as a device for recording information. In short, it suffices that the arithmetic device 12, the storage device 13, and the bus 11 are configured to cooperate with each other to execute information processing.

The storage device 13 can include a program that executes a technology relating to the present invention. In addition, data necessary for executing services relating to the present invention can be recorded as appropriate. In addition, the storage device 13 may also include a database.

Further, in the above description, the case where the arithmetic device 12 is executed based on the program provided in the storage device 13 has been described as an example, but as one form in which the bus 11, the arithmetic device 12, and the storage device 13 are combined, the information processing of the system may be realized as a programmable logic device capable of changing a hardware circuit itself or a dedicated circuit in which the information processing to be executed is determined.

The input device 14 is a device that inputs information. Examples of the input device 14 include an input device such as a keyboard, a mouse, a touch panel, or a pen-type instruction device. Note that the input device 14 may have other functions so that a touch panel has a display function.

Examples of an input person of the input device 14 include a user of a group scheduled to be audited or a group scheduled to conduct audit using the system according to the embodiment of the present invention. Examples of the group include a corporation, a corporate, a company, and the like. In addition, the user may be a person who performs a procedure for the group to be audited. For example, the user may include members, employees, employers, trustees, representatives, officers, and the like of the group.

The display device 15 has a function of displaying information. Examples of the display device 15 may include a liquid crystal display, a plasma display, an organic EL display, and the like, but in short, the display device 15 may be any device that can display information. Further, the input device 14 may be partially provided like the touch panel.

The network 19 has a function of transmitting information together with the communication IF 16. For example, the network 19 has a function of transmitting the information possessed by the information processing apparatus 10 to other information processing apparatuses 10. The communication IF 16 may have any connection type. For example, USB, IEEE 1394, Ethernet (registered trademark), PCI, SCSI, and the like may be used. The network 19 may be either wired or wireless, and in the case of the wire, an optical fiber, a coaxial cable, or the like may be used.

The hardware constituting the information processing apparatus according to the embodiment of the present invention may be a general information processing apparatus, a dedicated information processing apparatus for executing the example according to the present invention, or an information processing apparatus that is performed in a dedicated information processing apparatus that implements other technologies as a main purpose. In addition, the hardware may be a workstation, a desktop personal computer, a laptop personal computer, a laptop computer, a PDA, a mobile phone, a smartphone, or the like.

Although it has been described as one information processing apparatus 10 in Fig. 1, the information processing apparatus 10 may be configured to include a plurality of information processing apparatuses 10. The plurality of information processing apparatuses may be internally connected or may be externally connected via a network. In addition, when the information processing apparatus 10 is configured as the plurality of information processing apparatuses, an owner need only be able to use a plurality of information processing apparatuses even if the information processing apparatuses are different. Further, the information processing apparatus 10 may physically exist or a virtually exist. For example, the information processing apparatus 10 may be virtually realized by using cloud computing.

### 2. Configuration Example of Other Embodiments

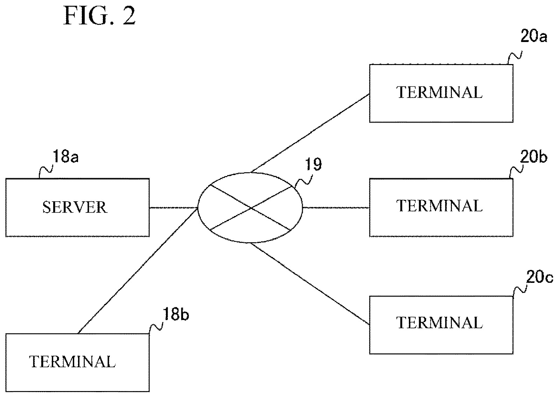

An example of a system of other embodiments according to the present invention will be described with reference to Fig. 2. A system of an embodiment according to the present invention includes a server 18a, a terminal 18b, and terminals 20a to 20c. Note that the server 18a and the terminal 18b may be the system of the embodiment according to the present invention.

It is considered that the system of the embodiment according to the present invention may be used, for example, when a first group audits a second group. The first group and the second group may have a capital relationship, for example, like a parent company and a subsidiary or an affiliated company. In other embodiments, the first and second groups may have a contractual relationship. As described above, the first and second groups include a corporation, a corporate, a company, and the like. Further, the first and second groups may be organizations in the same form or may be organizations in different forms.

The terminal 18b is used, for example, by an auditor involved in the first group that performs an audit. The auditor may include members, employees, employers, trustees, representatives, officers, and the like of the first group. Only one terminal 18b is illustrated in Fig. 2, but the number of terminals 18b may be plural.

A server 18a executes the system of the embodiment according to the present invention. The server 18a is configured to be connected to the terminal 18b. In addition, the server 18a is configured to be connected to terminals 20a to 20c.

The terminals 20a to 20c are used, for example, by the user relating to the second group. The user may include members, employees, employers, trustees, representatives, officers, and the like of the second group. Only three terminals 20 are illustrated in Fig. 2, but the number of terminals 20 may be two or less or four or more.

The server 18a, the terminal 18b, and the terminals 20a to 20c may each have the same basic configuration as the information processing apparatus 10 described above, may not have some thereof, or have other configurations. The abilities of each unit may be the same or different.

### 3. Function of System of Embodiment According to Present Invention

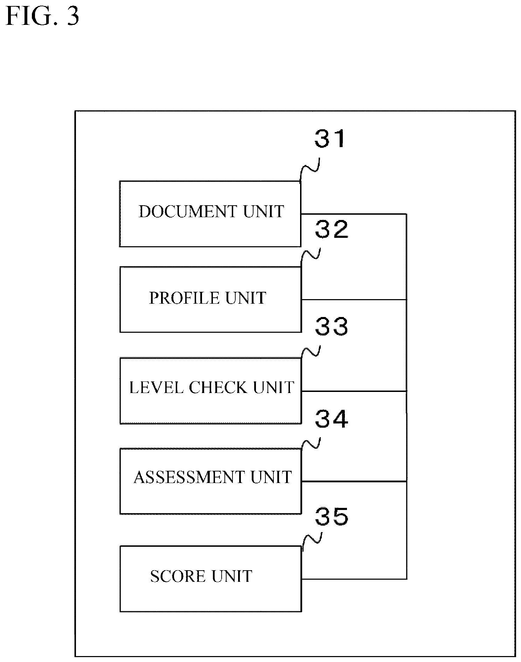

Next, the functions of the system according to the embodiment of the present invention will be described with reference to Fig. 3. Fig. 3 is a block diagram illustrating a specific example of a function of the system according to the embodiment of the present invention.

### 3.1. Document Unit 31

A document unit 31 has a function of presenting items relating to audit. An item may also be called a checkpoint (CP) in the document of this application. Items may be configured to be displayed in a predetermined order. In addition, the items may be configured to be displayed in an order changed according to answers to the items. In addition, the items may be configured so that contents corresponding to levels described below are displayed. An item display unit records the items to be displayed, and may be configured to have a function of referring to and displaying the items.

The document unit 31 may have a function of receiving information about suitability for an item. The document unit 31 may have a function of storing an association of the information about suitability for the item with the item. In addition, the document unit 31 may have a function of managing the association of the information about suitability for the item and the item. As one of the function of managing the association of the information about suitability for the item and the item, the document unit 31 may have the function of displaying the association.

The document unit 31 may have a function of associating and storing one indicator indicating a degree of control for one item relating to the audit, and may also have a function of displaying the association.

The document unit 31 may have a function of associating and storing a first item relating to audit or first information about suitability for the first item and a second item relating to audit or second information about suitability for the second item. In addition, the document unit 31 may have a function of displaying the association. In addition, when the first information is received by using the above association, the first information may be treated as receiving the second information. For example, when the first information is received, the first information may be used to display that the second information is received or to determine one of a plurality of indicators indicating a degree of control as receiving the second information.

### 3.2. Profile Unit 32

The profile unit 32 has a function of storing information about a group to be audited. The profile unit 32 may have a function of determining an attribute of the group by using the information about the group. The profile unit 32 may have a function of determining an indicator indicating a pass of the suitability of the audit based on the attribute of the group. The indicator indicating the pass of the suitability of the audit is sometimes called a suitability indicator of the audit. The suitability indicator may be determined for each major item.

### 3.3. Level Check Unit 33

A level check unit 33 has a function of displaying information about suitability for an item including one or more items relating to audit. In addition, the level check unit 33 includes a configuration for determining the information about the suitability.

Items relating to the audit or a medium item including one or more of the items may be a plurality of layers. For example, a first medium item may correspond to one or more items relating to audit, a second medium item may correspond to one or more first medium items, and a third medium item may correspond to one or more second medium items.

In one example, the major item may correspond to the plurality of third medium items. For example, four third medium items corresponding to levels 1 to 4 may correspond to one major item. In this example, three medium items are used, but the medium item may be 0 layers or 3 or more layers.

### 3.4. Assessment Unit 34

The assessment unit 34 has a function of displaying one of the indicators indicating the degree of control for the maintenance and/or operation of each principle.

In addition, for the major item including one or more items relating to the audit, the assessment unit 34 may have a function of determining one of the plurality of indicators indicating the degree of control, a function of associating and storing the major item and the determined one indicator, and a function of displaying the association. Since the COSO (Committee of Sponsoring Organizations of the Treadway Committee) stipulates 17 principles for an audit, for example, the major item may be one of the 17 principles, and may be an item of the 17 principles organized from the viewpoint of maintenance and operation (hereinafter, may be referred to as maintenance/operation of each principle), or may include one or more items corresponding to one indicator of the maintenance/operation of each principle. The maintenance/operation of each principle may include or may not include the maintenance and/or operation of provisions for a corporate group. Here, each principle of COSO relates to a single company (in the case of a company having a corporate group, a parent company itself) including a company having a corporate group, and the provisions for the corporate group relate to the entire corporate group in a parent company that has a corporate group such as a subsidiary or an affiliated company. Since the above 17 principles of COSO are abstract, one or more items relating to audit are to enable persons in charge of promoting internal control to take specific actions such as establishing systems, rules, regulations, and the like and promoting specific activities.

### 3.5. Score Unit 35

A score unit 35 has a function of displaying results relating to audit. The score unit 35 may present an indicator for the major item. The score unit 35 may display the result of the entire audit as a single numerical value. In addition, the score unit 35 may display the maintenance and operation in the major item relating to audit by comparing the maintenance and operation.

### 4. Embodiment of Present Invention

### 4.1. First Embodiment

As an embodiment of the present invention, a configuration example that can be executed on Excel (registered trademark) of Microsoft (registered trademark) will be described. The Excel (registered trademark) has a structure that can be executed on each sheet using a large number of functions, and includes a profile sheet, a document sheet, a level check sheet, an assessment sheet, and a score sheet.

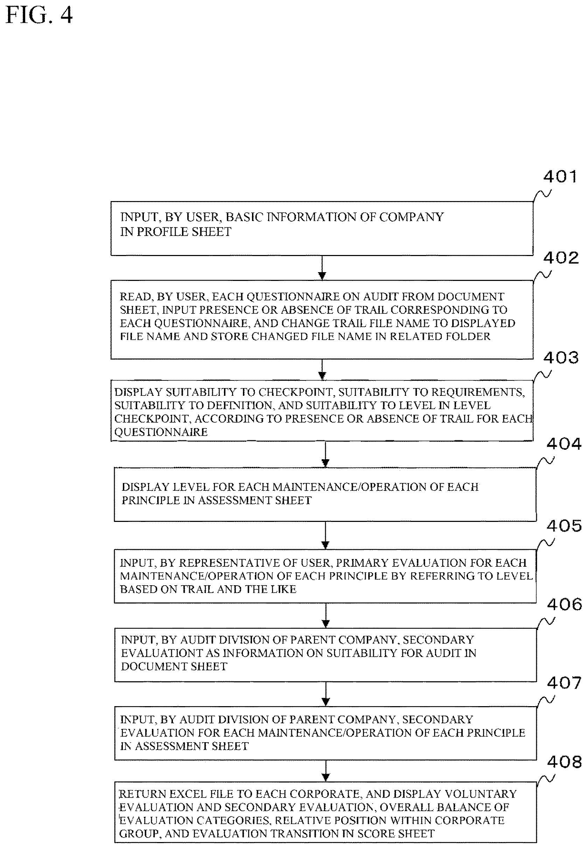

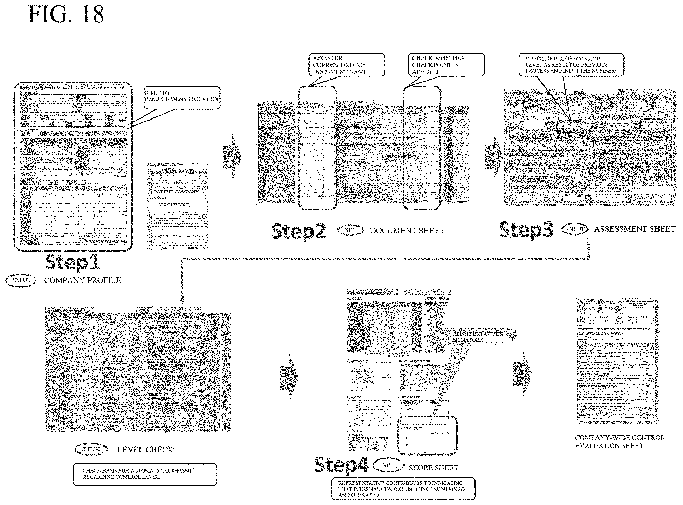

Here, the overall flow in which a user uses the system according to the embodiment of the present invention using each of the above sheets will be briefly described with reference to Fig. 4. First, the user inputs the basic information of the company in the profile sheet (401). Next, the user reads each questionnaire relating to audit in the document sheet, inputs the presence or absence of a trail corresponding to each questionnaire, and changes a file name of the trail to the displayed file name and stores the changed file name in a related folder (402). As a result, suitability to checkpoints, suitability to requirements, suitability to definitions, and suitability to levels are displayed on the level check sheet depending on the presence or absence of a trail for each questionnaire (403). In addition, in the assessment sheet, the level is displayed for each maintenance/operation of each principle (404). Next, a representative of the users inputs primary evaluation for each of the maintenance/operation of each principle by referring to the levels based on the trail, and the like (405). Next, an audit division of a parent company inputs a secondary evaluation in the document sheet as information about audit suitability (406). Next, the audit division of the parent company inputs the secondary evaluation for each of the maintenance/operation of each principle in the assessment sheet (407). Then, this Excel (registered trademark) file is returned to each corporate, and information such as voluntary evaluation and secondary evaluation, overall balance of evaluation categories, relative position within the corporate group, or evaluation transition is displayed in the score sheet (408). Fig. 18 is an example of a schematic representation of such an overall flow.

Next, each sheet will be described.

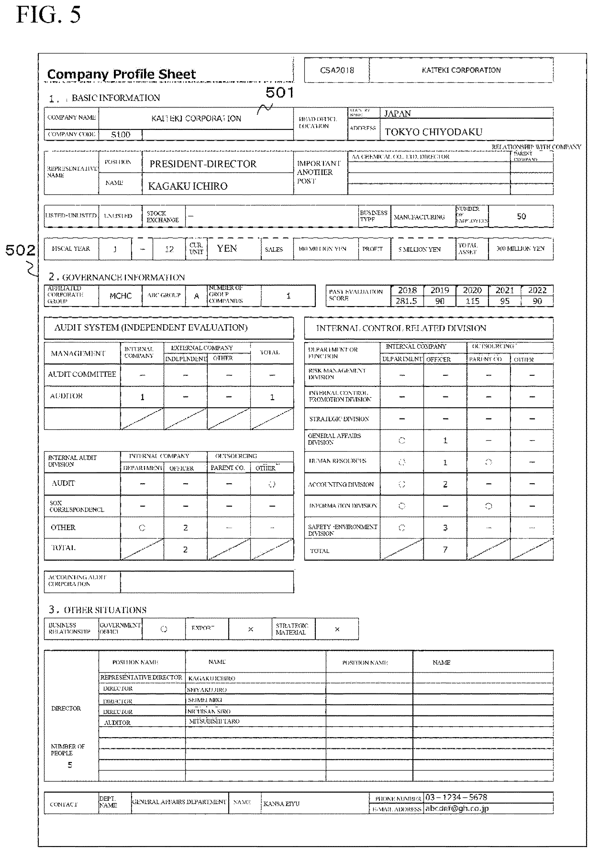

The profile sheet is a sheet to which basic information of a company is input. The profile sheet will be described with reference to Fig. 5. The profile sheet is configured to input information such as a company name, a head office location, a representative name, listed/unlisted classification, a business type, the number of employees, a fiscal year, a currency unit, sales, profit, and total assets, as the basic information (501). In addition, the profile sheet is configured to input an affiliated corporate group, an ABC group, the number of group companies, and the like as governance information of a company (502). When the use frequency of this system is more than twice, this sheet may be configured to store and present the previously input information. In addition, when there is a part that is different from the previously input information, the previously input information may be presented and may be configured to correct the changed location as appropriate.

Here, the ABC group will be described. The ABC group is associated with a pass level of an audit. The control categories to be input are classified as HC, A, B, C1, C2, and the like. In these classifications, the pass level of suitability is stipulated for the maintenance/operation of each principle according to status of each corporate. For example, a company that is positioned in a category of C1 is considered to have a pass level of suitability of 1 for maintenance of principle 1. On the other hand, a company that is positioned in a category of HC is considered to have a pass level of suitability of 4 for maintenance of principle 1. This is because the larger the company, the more socially responsible it is, and it is necessary to achieve a certain level for each principle within a legal framework of J-SOX and the like. Note that in the first embodiment, the pass level of suitability in the legal framework is explained, but the status of each corporate may be positioned based on other regulations in addition to a legal status, or may be positions based on arrangements and the like within a corporate group.

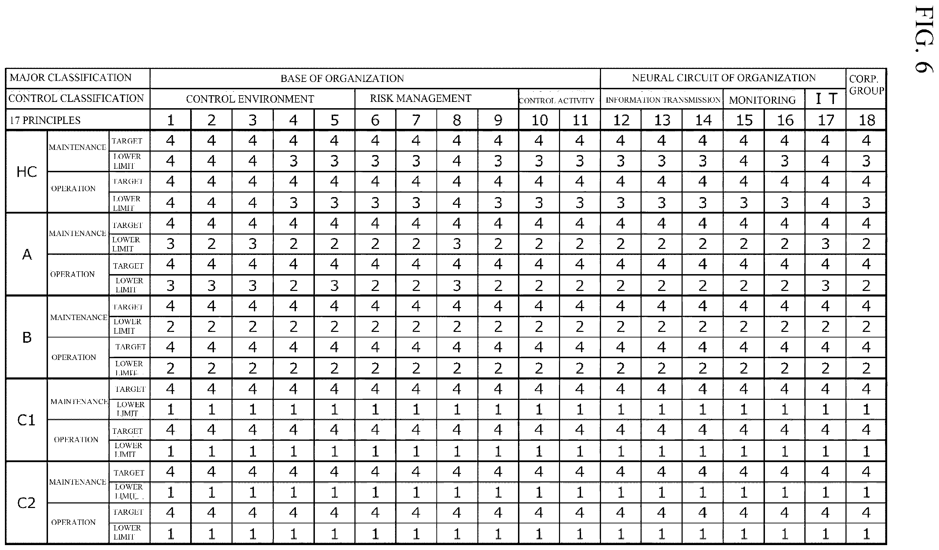

Fig. 6 is an example of a list showing a status of a corporate and a lower limit of each principle. There are five stages as the status of the corporate: HC, A, B, C1, and C2, and the target and lower limit levels are set for each of the maintenance/operation of each principle. This lower limit level is the pass level of the suitability described above. The target and lower limit level may be different depending on the maintenance/operation of each principle. For example, in the HC, principles 1 to 3 have a lower limit of 4, while principles 4 and 5 have a lower limit of 3. Also, the lower limit level for the maintenance and operation may be different. For example, in principle 15, the lower limit for the maintenance is 4, while the lower limit for the operation is 3. As illustrated in Fig. 6, a table is used in which the statuses of the corporate such as HC to C2 are associated with the lower limit levels in each of the maintenance/operation of each principle, and one of the positions of the corporate such as HC to C2 in the profile sheet is received from a user, and thus the lower limit level for each maintenance/operation of each principle is determined, so the user needs not to check different lower limit levels for each maintenance/operation of each principle.

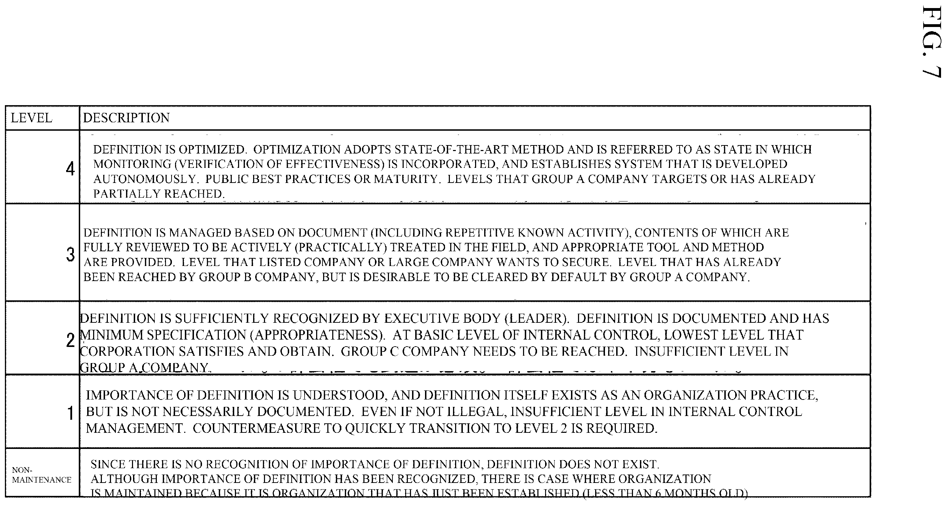

Next, the target and lower limit levels described above will be described. The degree of the level may indicate the degree of internal control in the documents of this application, and is described as the degree of control in the document of this application. In addition, a specific numerical value indicating the level may be described as an indicator of the degree of control. An example of a specific description of the levels of each maintenance/operation of each principle is summarized in the table of Fig. 7. Here, the levels are set as non-maintenance and levels 1 to 4, which will be described. The level 4 is an example of stronger internal control than the level 1. Note that the non-maintenance may be the level or a part of the indicators of the degree of control. In this way, in the audit, by not simply setting two values whether the audit passes or fails but setting the degree of control as multiple stages even when the audit passes, even if the audit passes, the user can understand what status the corporate is in.

Next, the number of group companies will be described.

When an integer value of 1 or more is input as the number of group companies, a company has a corporate group, so the maintenance/operation of each principle may be configured to include items relating to the corporate group. On the other hand, when the number of group companies is 0, a company does not have a corporate group, so the maintenance/operation of each principle may be configured not to include items relating to the corporate group. Depending on the input of the number of group companies in the profile sheet, the document sheet, the level check sheet, the assessment sheet, and the like may be configured so that items relating to the corporate group are not displayed. For example, when an integer value of 1 or more is input as the number of group companies, the maintenance/operation of each principle may be configured to be presented including items relating to the corporate group, and when the number of group companies is 0, the maintenance/operation of each principle may be configured to be presented without including items relating to the corporate group. When the system of the first embodiment employs such a configuration, a user who does not have a corporate group has an advantage that he/she can concentrate on an audit response that should originally be taken without looking at items relating to a corporate group that does not need to be answered in a complicated audit response.

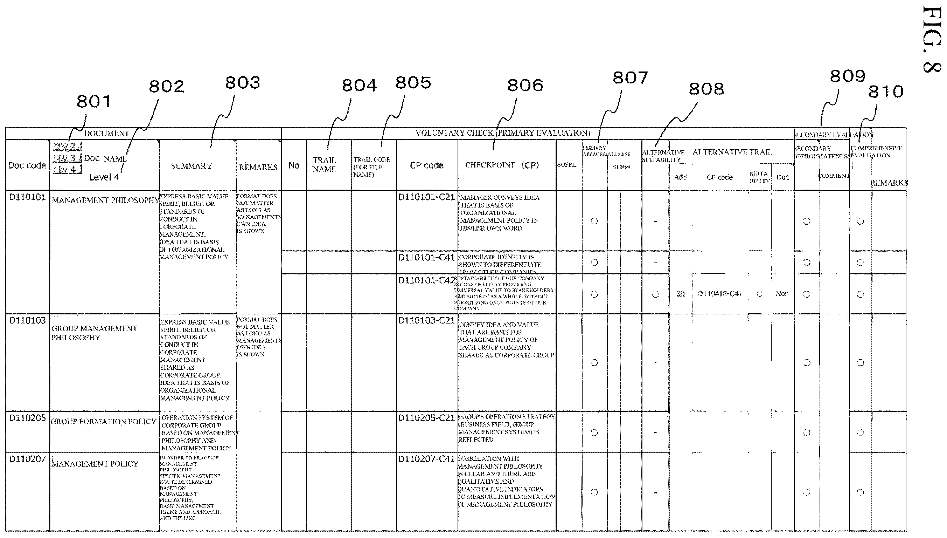

Next, the number of document sheets will be described. The document sheet is a sheet for inputting answers to items relating to audit. The document sheet will be described with reference to Fig. 8. Fig. 8 is an example of a part of the document sheet.

The present sheet is equipped with a button to set a level (801). The button has levels 2 to 4, and is configured so that the user can select one of the levels. Note that since items for level 1 are configured to be premised, the items are configured to be always displayed even when any of the buttons of levels 2 to 4 is selected. The selected level is configured to be presented (802). When one of the multiple levels is selected, the items relating to audit corresponding to each level are configured to be displayed. The levels 1 to 4 are configured to include items relating to lower levels. That is, when the level 2 is selected, both items of the level 1 and level 2 are presented, when the level 3 is selected, all items of the levels 1 to 3 are presented, and when the level 4 is presented, all the items of the levels 1 to 4 may be presented. Note that one item may be associated with one level. Note that there is no need for a checkpoint corresponding to level 1. This is because when the suitability for the level 2 is denied, the suitability may be determined to be level 1 or lower. Note that in the assessment sheet described later, level 1 may not be defined, but displayed by a state of level 1 as an example. In addition, the non-maintenance means a very peculiar situation, and may indicate a situation where there is no maintenance performed by the company.

In the past, even if internal control should be strengthened, there is need to consider what specific measures a user needs to take, and it is not possible to appropriately support users who are not particularly familiar with audit. However, when the system according to the embodiment of the present invention can easily switch presentation from a degree of control (for example, level 1) with low internal control constraint to a degree of control (for example, level 4) with high internal control constraint, it is possible to appropriately support what specifically users should perform to strengthen internal control for each maintenance/operation of each principle.

Note that in the first embodiment, when the user selects a button relating to a level, the system may be configured to determine whether or not to uniformly present items corresponding to levels, but in another embodiment, may be configured to present items corresponding to the levels of maintenance/operation of each principle. Specifically, buttons of levels 1 to 4 are provided in association with each 36 (1 of a corporate group is added to 17 principles of COSO, and since there is maintenance and operation in each of 18 in total, 18 × 2 is 36) which is the maintenance/operation of each principle, and by pressing the buttons of each level of the maintenance/operation of each principle, the corresponding items under the corresponding levels may be presented. With this configuration, for each maintenance/operation of each principle, it is possible to see the items to reach each level.

Further, the level may be determined according to the input of the profile sheet. That is, since the pass suitability is determined for each maintenance/operation of each principle in the input of the profile sheet, an item for a level corresponding to the pass suitability may be configured to be presented. That is, an item of a level corresponding to the pass suitability for each maintenance/operation of each principle according to the attribute of the company may be configured to be presented.

For example, when the attribute of the company is a C1 group, the pass suitability for the maintenance of principle 2 is level 2, and the pass suitability for the operation of principle 3 is level 3 in this C1 group, for the items presented in the document sheet, the item of the maintenance of principle 2 is level 2, and the item of the maintenance of principle 3 is level 3. Here, the item presented corresponding to the level includes items under the above level. Therefore, more specifically, the items presented as the level 2 in the maintenance of principle 2 are items of both level 1 and level 2 items in the maintenance of principle 2, and the items of level 3 in the operation of principle 3 are items of level 1, level 2, and level 3 in the operation of principle 3. In the case of this configuration, a user at least passes the audit when he/she responds to the items presented.

In addition, since the pass suitability is only the minimum level for audit, a higher level needs to be targeted. Therefore, the item may be configured to be presented at a level obtained by adding 1 or a predetermined value to the level of the pass suitability for each maintenance/operation of each principle which is determined based on the input of the profile sheet. The predetermined value may be, for example, 2, 3, or the like, but may be constrained by the upper limit (for example, if the level is determined to be 1 to 4, the upper limit is level 4) of the level. The system with this configuration is configured to support a user aim for a level that is always 1 or higher by a predetermined value than the minimum level for audit.

In addition, in the first embodiment, in the 17 principles of COSO and the corporate group, the maintenance and operation are treated separately in all steps. In other words, the level is defined for each maintenance and operation, the items associated with the level are configured to be defined, and the information about the suitability for each item is input, the level is determined for each maintenance and operation, and the level is presented. This is because a company can be operated in reality even when there are no internal regulations (that is, when it is not maintained), and the operation is not necessarily premised on the maintenance, but the maintenance and operation relating to the internal control are considered to be separate concept. In this way, the system according to the first embodiment treats the maintenance and operation separately, and thus can help the information about the actual internal control state of the company support audit more elaborately.

Specifically, for example, the system according to the first embodiment can be configured so that the maintenance and operation can be presented to the user as separate items, and as a result, a user can cope with more detailed audit based on the difference in the above concepts. In addition, the system according to the first embodiment is configured to be able to input the information about suitability for the maintenance and operation as separate items, and thus can accurately provide the actual situation as audit information. In addition, the system according to the first embodiment is configured to be separately define and determine the maintenance and operation, and accurately judge the situation regarding the internal audit of the user, so it is possible for a user to consider and improve each of the maintenance and operation.

The maintenance/operation of each principle is described in a column. In this sheet, each item relating to audit is represented by row. A summary 803 contains a description of one or more items. Here, for example, "a statement of basic values, spirit, beliefs, or behavior standards in corporate management. Idea that forms basis of the organizational management policy" is described. In addition, supplementary information is provided in the form of remarks. Next, one or more rows are displayed corresponding to the summary. As will be described later, it is possible to input the information about the suitability for each item corresponding to each row.

Each row has columns for a trail name 804, a trail code 805, a checkpoint 806, and primary appropriateness 807. The trail name is a location to input the trail name in each corporate. This is because the name corresponding to the trail is different for each corporate, and thus it is possible to input names for each corporate. When the trail name is input, the trail code will be automatically presented. An authentication code is used as a file name of the trail file. The checkpoint describes specific information about the trail to be collected. For example, here, it can be seen that "the management conveys the idea that is the basis of the organizational management policy in his own words", and the use corporate should prepare the idea that is the basis of organizational management such as company motto, company policy, management policy, and slogan, that the management explains in his own words. If the trail data relating to these can be collected, "o" is input in the primary appropriateness. Examples of the trail data include files showing company motto, company policy, management policy, slogan, and the like. In addition, even if there is no such trail in the company, when a president speaks in front of employees every day and the contents include the idea that is the basis of the organizational management policy, it corresponds to the checkpoint. Therefore, in such a case, such a statement is stated in the remarks, and "o" is input as the primary appropriateness. In this way, since the items relating to the audit and the information about suitability for the items are input, stored, and/or presented in association with each other, it is possible to support the audit by organizing suitability for a huge quantity of audit items used.

Next, alternative suitability 808 will be described. A trail for one checkpoint may be available for a trail for another checkpoint. For example, the trail for the checkpoint in the management philosophy "We are considering the sustainability of our company by providing universal value to stakeholders and society in general, without prioritizing only our own profits" is another checkpoint which is an alternative trail for "complying principles 2-1, 2-2, and 2-3 of corporate governance code." which is another checkpoint. Here, it can be seen that the principles 2-1, 2-2, and 2-3 of the corporate governance code are as follows: "Listed companies [Principle 2.1 Business Principles as the Formulation of Corporate Value Creation Over the Mid- to Long-Term Guided by their position concerning social responsibility, companies should undertake their businesses in order to create value for all stakeholders while increasing corporate value over the mid- to long-term. To this end, companies should draft and maintain business principles that will become the basis for such activities", "Listed companies [Principle 2-2. Code of Conduct Companies should draft and implement a code of conduct for employees in order to express their values with respect to appropriate cooperation with and serving the interests of stakeholders and carrying out sound and ethical business activities. The board of directors is responsible for formulation and revising the code of conduct, which should be widely permeated and adhered to at the forefront of domestic and international business activities", and "Listed companies [Principle 2-3. Problem about Sustainability Including Social Environment Problem, companies should appropriately deal with the problem about sustainability including social environment problem".

Therefore, the document sheet is configured so that when the primary appropriateness of one checkpoint is "o", the primary appropriateness of the checkpoint corresponding to the checkpoint is set to be "o". In this configuration, one checkpoint is associated with another checkpoint in the document sheet, and when the primary appropriateness is input as "o" for one checkpoint, it may be realized by having a function of "o" for the primary appropriateness of the other checkpoints. Note that the configuration of the alternative suitability may be adopted in the case where the trail for one checkpoint can be used as the trail for another checkpoint, and in the relationship between one checkpoint and another checkpoint, the suitability for the one checkpoint may be adopted in cases where it can be used for the suitability for the another checkpoint. In the latter stage, for example, checkpoint A may be conformed by conforming both checkpoint B and checkpoint C, and one checkpoint may be conformed by conforming a plurality of other checkpoints.

In this way, when the information about suitability for the first item relating to the audit may be first information and the information about the suitability for the second item relating to the audit may be second information, and when the reception unit receives the first information corresponding to the first item, the first item or the first information and the second item or the second information that are associated with each other are used to treat the first information as the second information, the user is relieved of the burden on the second item. Here, the information about the suitability for the item may include, for example, the primary appropriateness "o" described above, but may be an input of information about whether or not to conform items such as "Yes", "YES", "No", and "NO" or an input of information in the state in which "1", "A", and "a" are defined to be conformed and "2", "B", and "b" are defined to be non-conformed in advance, in addition to the primary appropriateness.

In addition, another example of the information about the suitability for the item may be information including the degree of suitability. For example, there are five levels from 1 to 5 as the degree of suitability, and the information from one of these levels may be input. In this case, 1 to 5 may be numerical information, or may be predefined "A" to "E", or characters "a" to "e". In addition, when using these scales, it is predefined which of 1 or 5 ("A" or "E", "a", or "e") indicates that the suitability is higher than others, and may be the information to be input based on those rules. When the degree of suitability is input and stored and presented to an auditor to be described later, there is an advantage that the auditor can carefully consider items with a low degree of suitability.

In addition, as an example in which the information about suitability for the first item relating to the audit may be first information and the information about the suitability for the second item relating to the audit may be second information, and when the reception unit receives the first information corresponding to the first item, the association in which the first item or the first information and the second item or the second information that are associated with each other is used to treat the first information as the second information, when the second information is configured to be input, the burden on the user to input the second information is reduced.

In addition, as an example in which the information about the suitability for the first item relating to the audit may be first information and the information about the suitability for the second item relating to the audit may be second information, and when the reception unit receives the first information corresponding to the first item, the association in which the first item or the first information and the second item or the second information that are associated with each other is used to treat the first information as the second information, the burden on the user to investigate the second item is reduced.

In addition, as an example in which the information about the suitability for the first item relating to the audit may be first information and the information about the suitability for the second item relating to the audit may be second information, when the reception unit receives the first information corresponding to the first item, an association in which the first item or the first information and the second item or the second information that are associated with each other is used to treat the first information as the second information, when the first item and/or the first information is displayed in association with the display that the second information is present, the user knows that there is the second information in association with the first item or the first information. Here, examples of the configuration in which the display that the second information exists is displayed in association with the first item and/or the first information include the configuration in which the first item and/or the first information is presented in the same row or the same column as the input location or the presentation location of the second information, the configuration in which the first item and/or the first information is presented when the instruction device is superimposed on the second information, the configuration in which the first item and/or the first information is presented when the second information is selected, or the like, but are not limited thereto.

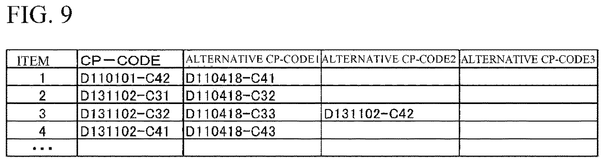

The system according to the embodiment of the present invention may have, for example, a table in which the checkpoints with the alternative trails are associated with each checkpoint as illustrated in Fig. 9. In Fig. 9, only those with checkpoints that can be alternative trails are listed, but those without checkpoints that can be alternative trails may be provided. In addition, as illustrated in Fig. 9, the checkpoints that can be alternative trails may have multiple checkpoints for one checkpoint. In addition, in Fig. 9, although the code of the checkpoint is used, codes indicating trail data and trail file may be used and thus are each associated with each other.

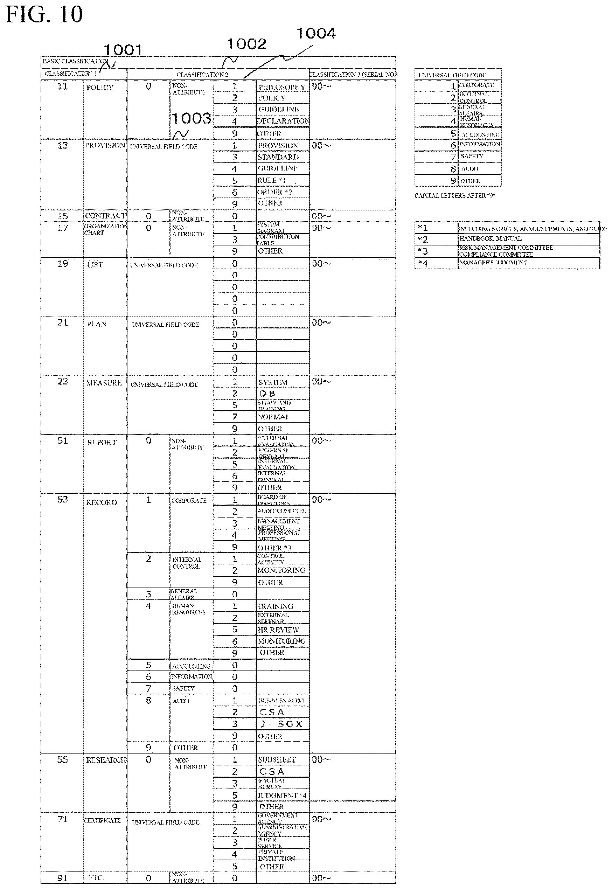

Here, a code number adopts a method of distinguishing items relating to audit and trail data relating to the information about the suitability for the above items using alphanumeric characters. For example, as illustrated in Fig. 10, from the viewpoint of the audit, it is easy to carry out and classify audit by defining major classification 1 1001 such as policies, provisions, and contracts. In addition, classification 2 1002 is defined below the major classification. Classification 2 is provided with a generic field code 1003 and a detailed classification 1004 corresponding to each classification 1. The generic field code is information corresponding to the organization in the company such as corporation, general affairs, and human affairs. This has the advantage that when necessary information and trails are collected, an inquiring department can specify the organization (department) to inquire about the information or trails from the code based on the relationship between the code and the organization (department). Further, in the detailed classifications corresponding to each classification 1 in classification 2, the classifications are made according to the contents of the major classification, and the specific contents according to each major classification can be searched immediately. For example, the policy includes 1. Philosophy, 2. Policy, 3. Guidance, 4. Declaration, and the provision includes 1. Regulation, 3. Standard, 4. Guideline, 5. Rule, 6. Procedure.

The comprehensive evaluation 810 is configured to display the results relating to the item. The result of the primary evaluation 807 is reflected at the stage where the secondary evaluation has not been performed. For example, when a trail name 804 is input and "o" is input as primary appropriateness 807, the comprehensive evaluation 810 becomes also "o", and when the primary appropriateness 807 is "×", the comprehensive evaluation 810 is also "x". Note that when "o" is input as the primary appropriateness 807 even though the trail name 804 is not input, since it is considered appropriate in the primary evaluation, the comprehensive evaluation 810 is "o", but it may be configured to present a warning to remind the user that the trail name 804 has not been input. This configuration has the advantage that the user can be notified that "o" is inappropriately input to the primary appropriateness.

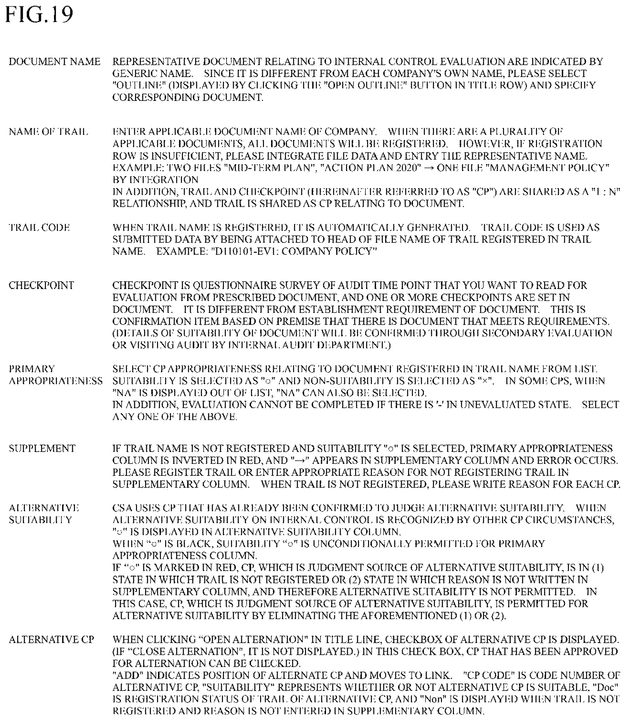

Note that Fig. 19 is another example of the description about the document sheet, and the user can use the document sheet on the assumption that this system operates according to the description.

Next, the level check sheet will be described. The level check sheet is a sheet for the user to simply check the information about the suitability for each item. As described below, a level is determined based on a large number of items relating to audit. Therefore, by using this level check sheet, it is possible to easily specify, from a large number of items, for which item relating to audit the information about the suitability is the cause when the level is different from the expected level.

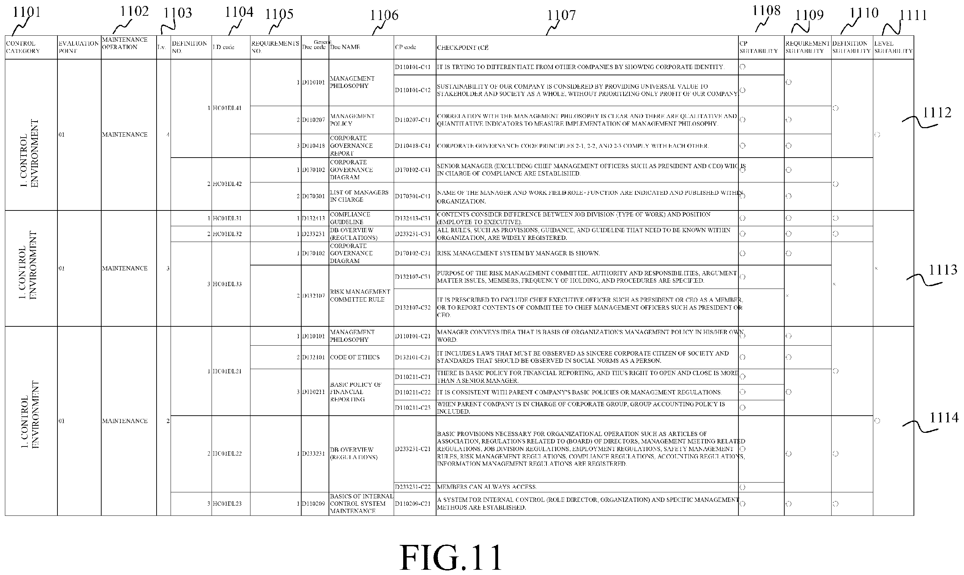

The level check sheet will be described with reference to Fig. 11. The level check sheet simply displays the relationship between the item and the suitability. That is, each maintenance/operation of each principle has multiple levels 1 to 4. Each level in maintenance/operation of each principle is composed of one or more definitions, each definition is composed of one or more requirements, and each requirement is composed of one or more checkpoints.

For example, in Fig. 11, in a control category 1101, 1. Under control environment, 2 to 4 levels 1103 are displayed for maintenance 1102. Maintenance level 1 and operation levels 1 to 4 are omitted from Fig. 11 due to space limitations. 1. There are two definitions 1104 regarding level 4 of the control environment maintenance. Specifically, HC01DL41 and HC01DL42 are assigned as those codes. Also, each definition may be composed of one or more requirements 1105. For example, HC01DL41 is composed of three requirements: management philosophy, management policy, and corporate governance report, and HC01DL42 is composed of two requirements: corporate governance diagram and list of managers in charge. Also, each requirement has one or more checkpoints 1107. For example, the management philosophy is, as a checkpoint, "The corporate identity is shown to be differentiated from other companies" and "Our company not only prioritizes our own interests, but also considers sustainability by providing universal value to stakeholders and society as a whole", and is assigned CP-CODE of D110101-C41 and CP-CODE 1106 of D110101-C42, respectively. Then, for each such checkpoint (CP suitability) 1108, the information about the suitability for each checkpoint input in the document sheet is reflected. In Fig. 11, since in the document sheet, "o" is input as the primary appropriateness (or comprehensive evaluation) for the CP-CODE of D110101-C41 and the CP-CODE of D110101-C42, "o" is reflected to the CP suitability of the corresponding location of the level check sheet.

Next, from the CP suitability that reflects the information in the document sheet, the method of determining "o" for each level suitability will be described. Requirement suitability 1109, definition suitability 1110, and level suitability 1111 are determined as "o" when all the corresponding subordinate concepts are "o". For example, only when both the CP suitability of D110101-C41 and the CP suitability of D110101-C42 is "o", the requirement suitability of D110101 is "o", and when at least one of the CP suitability of D110101-C41 and the CP suitability of D110101-C42 is "×", the requirement suitability of D110101 is "x". Then, only when all of the requirement suitability of D110101, the requirement suitability of D110207, and the requirement suitability of D110418 are "o", the definition suitability of HC01DL41 becomes "o", and when at least one of the requirement suitability of D110101, the requirement suitability of D110207, and the requirement suitability of D110418 is "×", the definition suitability of HC01DL41 is "x". In addition, only when both the definition suitability of HC01DL41 and the definition suitability of HC01DL42 are "o", 1. Level 4 of the control environment maintenance becomes "o", and when at least one of the definition suitability of HC01DL41 and the definition suitability of HC01DL42 is "×", 1. Level 4 of control environment maintenance becomes "x".

By constructing the level check sheet in this way, it is possible to specify the CP suitability that is the cause when there is an "x" in the level suitability. For example, 1. Level 3 1113 of the control environment maintenance is "x". When looking at the corresponding points, it can be seen that the definition suitability of HC01DL33 becomes "×", the requirement suitability of D132107 becomes "×", and the CP suitability of D132107-C32 becomes "x". Therefore, for example, it is necessary to check the checkpoint regarding D132107-C32 in the document sheet. In other words, when the problem of the trail corresponding to the checkpoint relating to D132107-C32 can be solved, it can be seen that 1. Level 3 of the control environment maintenance can also be "o". In this example, as illustrated in Fig. 11, there was only one CP suitability with a problem, but due to the above configuration, since the superordinate concept becomes "o" when all the subordinate concepts are "o", there may be a plurality of CP suitability with a problem. Even in such a case, the user can check the problematic checkpoint in a large number of document sheets by checking the level check sheet. In particular, since the document sheet is composed of a large number of necessary items for audit which is complicated and has vast materials and there are also audit items that are not essential for a corporate, an embodiment according to the present invention is provided with a configuration in which the superordinate concept is suitable when all the corresponding subordinate concept items are suitable, and thus has an advantage that a corporate can check items that need to be suitable in the audit concretely and simply.

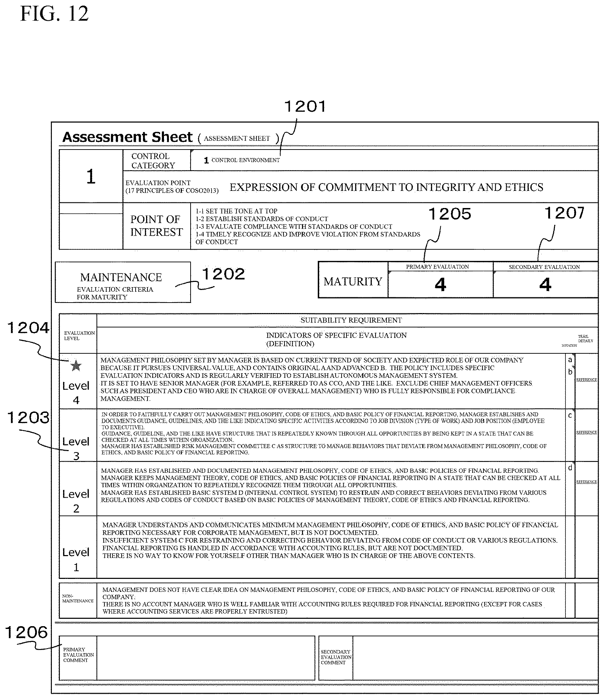

Next, the assessment sheet will be described with reference to Fig. 12. The assessment sheet is a sheet that displays the results based on the information about suitability for each maintenance/operation of each principle, and also can input the related information. As illustrated in the example of Fig. 12, the assessment sheet may be configured to be provided for each maintenance/operation of each principle.

Fig. 12 shows, as an example, 1. Maintenance 1202 regarding the classification of the controlled environment 1201. Levels are classified from non-maintenance to level 4 1203, and specific descriptions are given for each level. In addition, among those multiple levels, using the information input to the level check sheet, the level is displayed by the black star mark 1204. Fig. 12 illustrates the case where level 4 is determined. The level is determined to be the highest level in the level check sheet where all lower levels are "o" for the maintenance or operation of each principle. For example, in Fig. 11 which is 1. the maintenance relating to the control environment, level 2 is "o" 1114, level 3 is "x" 1113, and level 4 is "o" 1112. In this case, since level 2 is "o" but level 3 is "×", even if level 4 is "o", all the lower levels are "o", which is the highest value of level 2. When the levels 1 to 3 are "o" and the level 4 is "×", it is level 3, and when all the levels 1 to 4 are "o", it is level 4.

In the assessment sheet, by the configuration in which the level is determined mechanically based on the information about suitability and presented, the user can easily understand in what status the user is even if it passes.

The primary evaluation 1205 in Fig. 12 is considered to be input by a representative of a company to be audited. The representative is considered to perform a primary evaluation 1205, taking into account evaluation 1204 based on information about suitability for audit and the specific evaluation indicators (definition) at each level 1203. For example, when the mechanically derived evaluation 1204 is level 3, the representative is based on the specific evaluation indicator (definition) of levels 1 to 4, and when the maintenance/operation of the principle should be evaluated as level 4, representatives may input 4 as the primary evaluation 1205. However, in this case, since the evaluation level higher than the level 4 of the mechanically derived evaluation 1204 is 4, it is required to input the reason to the primary evaluation comment 1206. On the other hand, when the representative considers that the level of the mechanically derived evaluation 1204 and the primary evaluation 1205 are the same, the same level as the evaluation 1204 without inputting the primary evaluation comment 1206 may be input in the primary evaluation 1205.

In the assessment sheet, by providing a location where the primary evaluation 1205 is input, the representative can recognize the results more independently through the input, as compared with the case where the mechanical result is simply displayed 1204, and there is an advantage that the opinion of the representative can be grasped by inputting. In addition, by providing the primary evaluation comment 1206, when the mechanical result 1204 and the evaluation of the representative 1205 are different, the representative can describe the different reason, and the third party can also grasp the opinion of the representative.

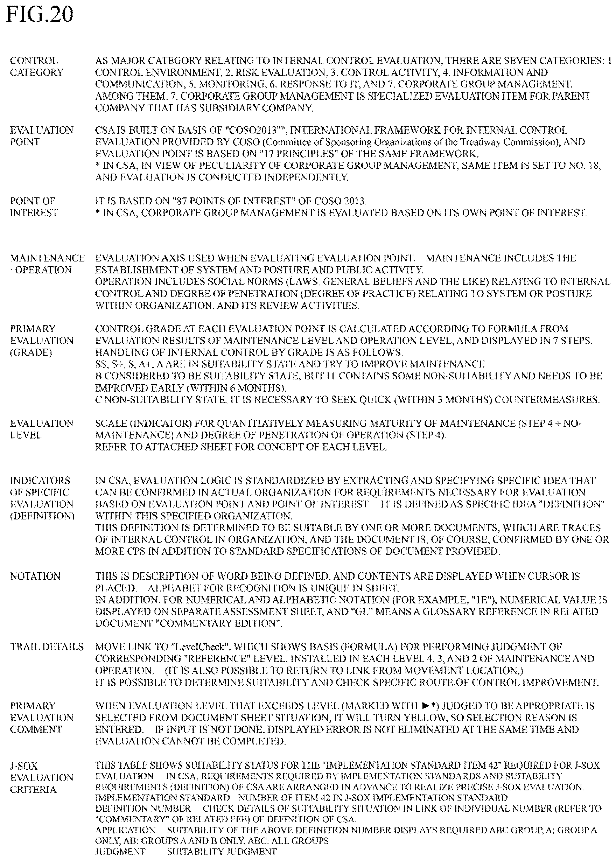

In addition, the assessment sheet may also indicate the level of pass suitability of the usage corporate for each maintenance/operation of each principle of COSO. The level may be displayed based on the profile sheet or the like. The level for the pass suitability may be configured to be displayed on the assessment sheet by a different mark than the level based on the information about suitability. The assessment sheet is configured to present both the level of the pass suitability, the level based on the information about suitability for the maintenance/operation of each principle, so the user can easily compare and understand the relationship between the level the maintenance/operation of each principle and the pass suitability. Note that Fig. 20 is another example of the description about the assessment sheet, and the user can use the assessment sheet on the assumption that this system operates according to the description.

Thereafter, the Excel (registered trademark) file is transmitted to a side (hereinafter, also referred to as "auditor") that audits the user's company such as the audit division of the parent company, and the auditor inputs the secondary evaluation 809 of the document sheet. The column of the secondary evaluation 809 may have a configuration that is not disclosed in the stage in which the user uses. For example, the column of the secondary evaluation 809 is configured not to be displayed at the stage where the user inputs the primary appropriateness 807 on the Excel file, and the column of the secondary evaluation 809 may be configured to be displayed by macro and the like on the Excel by a password input by the auditor. With this configuration, it is possible to prevent inappropriate input by the user. The auditor performs the secondary evaluation 809 in consideration of the Excel (registered trademark) file and the trail data regarding CP as information about suitability at each checkpoint. That is, the auditor checks whether each trail data that each corporate considers to have a trail indicating suitability at the checkpoint is actually the trail corresponding to the checkpoint. Specifically, the auditor inputs "o" in the secondary evaluation 809 if the data transmitted as each trail data is the trail data corresponding to each checkpoint. In this case, since the comprehensive evaluation in the document sheet does not change, the CP suitability in the level check sheet in Fig. 11 does not change, and the requirement suitability 1109 to level suitability 1111 in Fig. 11 do not change either. On the other hand, the auditor sets the secondary evaluation 809 as "×" if data transmitted as each trail data is the trail data that does not correspond to each checkpoint. In the comprehensive evaluation 810, since the secondary appropriateness 809 is prioritized over the primary appropriateness 807, and the input result of the secondary appropriateness 809 is reflected, in this case, in the document sheet, the comprehensive evaluation 819 of the checkpoint becomes "×", and the CP suitability in the corresponding level check sheet becomes "x". As a result, from the relationship of the CP suitability, the requirement suitability, the definition suitability, and the level suitability in the level check sheet described above, the requirement suitability, the definition suitability, and the level suitability, which are higher than the CP suitability marked with "x" becomes "x". Therefore, in the assessment sheet illustrated in Fig. 12, the evaluation (1204) of the level of maintenance or operation of the principle that includes the level suitability is displayed as one less than the level suitability. For example, when the level suitability corresponding to level 3 becomes "×", the level 2 is displayed in the assessment sheet.

The auditor also inputs the secondary assessment 1207 for the maintenance/operation of each principle in the assessment sheet. The user may not be able to input the secondary evaluation 1207, and the auditor may input the secondary evaluation 1207 with a password. With this configuration, it is possible to prevent inappropriate input by the user.

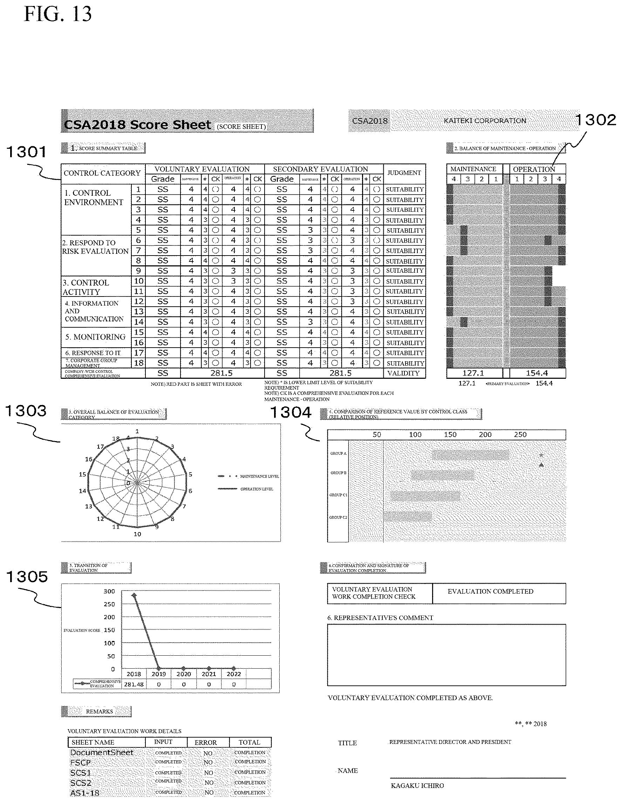

The score sheet displays the results of the audit. Fig. 13 is an example of the score sheet. A score summary table 1301 simply displays the results based on the assessment sheet regarding each of the maintenance and/or operation of all the principles. With this configuration, a user can evaluate each of the maintenance and/or operation, and the like of all the principles. In addition, in the assessment sheet, the level may be displayed for the voluntary evaluation (evaluation by the user) and the secondary evaluation (evaluation by the auditor), for each of the maintenance/operation of each principle. With this configuration, the user can simply understand the difference between the voluntary evaluation and the secondary evaluation by the audit division. In addition, the assessment sheet may be configured such that the lower limit level of the suitability requirement is displayed in a column of an asterisk mark for each maintenance/operation of each principle. With this configuration, the user can understand the lower limit level of the suitability requirement, that is, the pass suitability.

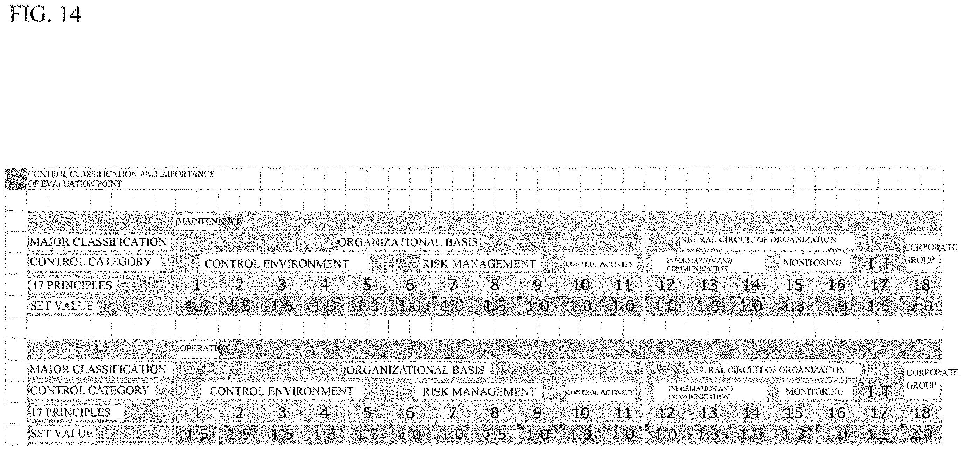

In addition, the score summary table 1301 presents numerical information as company-wide controlled comprehensive evaluation. For example, in Fig. 14, the numerical information is calculated by multiplying a setting value for each maintenance/operation of each principle by the level of the result of maintenance/operation of each corresponding principle. In this way, by calculating one numerical information even though there are multiple audit items as the audit result of the usage corporate, the result of the entire audit of the year can be easily understood with one numerical value.

In addition, in the balance 1302 between the maintenance and operation of the score sheet, levels 1 to 4 are displayed by a horizontal bar graph in comparison with the maintenance and operation of each principle. By comparing the maintenance and operation of each principle, the balance between the maintenance and operation is displayed to be simply understood. Here, in the horizontal bar graph, based on the result of the score summary table, columns correspond to each principle, the maintenance is displayed on the left side as the horizontal axis, and the operation is displayed on the right side.

In addition, the overall balance 1303 of the evaluation categories in the score sheet may be configured to display a radar chart for the entire maintenance/operation of each principle. With this configuration, the overall tendency of the maintenance/operation of each principle can be presented in an easy-to-understand manner, not the evaluation of each maintenance/operation of each principle.

In addition, as a comparison of standard values by control class 1304, the relative position of the user in the whole may be displayed. In the comparison of the standard values, the vertical axis is classified into A group, B group, C1 group, C2 group, and corporate group, and the horizontal axis is a numerical axis of company-wide controlled comprehensive evaluation. In the example of Fig. 13, since the evaluation score is 281.5, the black star mark is presented at that location. In addition, excluding a usage entrepreneur from the corporate group, the upper limit value and the lower limit value of the numerical value of the company-wide controlled comprehensive evaluation of the corporate belonging to each group are displayed. In Fig. 13, in the group A, around 125 to around 240, and in the group B, around 100 to around 180 are displayed by the horizontal bar graph. By displaying the corporate other than the users in each group in the corporate group in comparison with the corporate users, the statuses of the users in each group can be simply understood.

In addition, in the row corresponding to each group in the comparison of standard values by control class, the mark indicating the numerical value may be displayed at locations corresponding to various statistical numerical values such as an arithmetic mean and a median value of the corporate-wide control comprehensive evaluation of corporate belonging to each group in the corporate group. By displaying the arithmetic mean or median value, the user can easily understand the status of our company compared to other corporate belonging to the same group.

The transition of the evaluation 1305 indicates the evaluation of each year. Fig. 13 illustrates an example that is displayed as a result of audit in 2018. In this way, by displaying both the past audit results and the results of the relevant year can be displayed, it is possible to compare the past results with the results of this year. In addition, by making it possible to display the results of multiple past audits and the results of this year's audits, it is easy to understand the transition of audit results over multiple years from the past to this year.

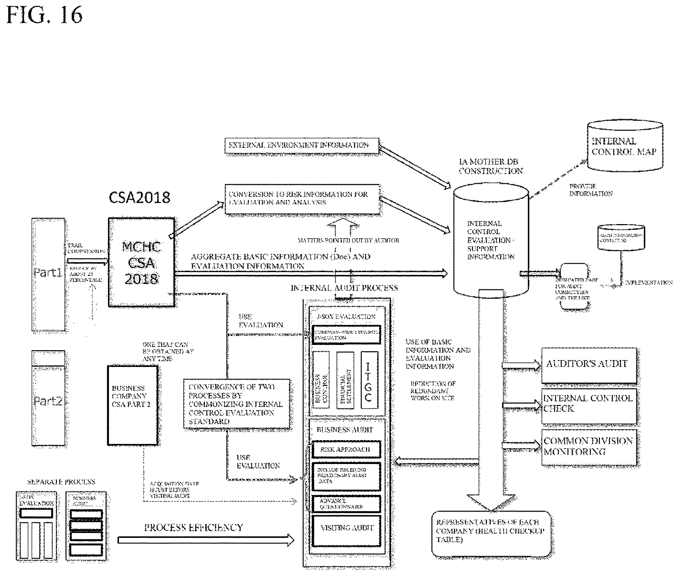

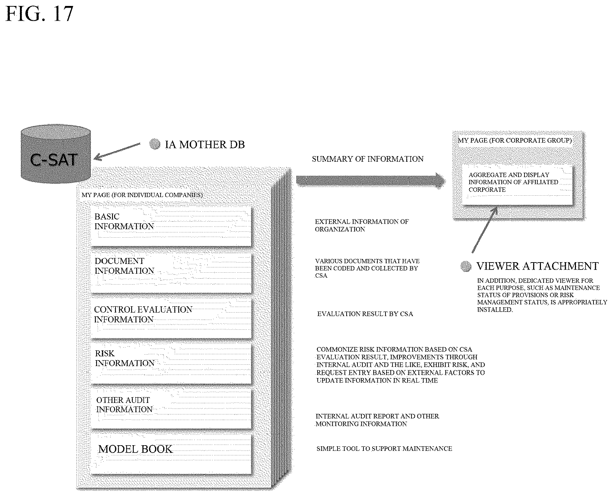

The file in which such information is input may be shared as information about the company including the parent company and the affiliated companies. For example, as illustrated in Fig. 16, a person (for example, common division such as corporate auditor audit, person who checks internal characteristics, personnel division, or general affairs division) who wants information about audit by sharing information about audit in a mother DB (database) can be accessed, and users do not have to provide information about audit including similar audit trails again. As for the contents of the DB, My Page may be configured for each company. For example, Fig. 17 is an example. Various types of information such as information about each company, information about audit, evaluation results of audit, and information about risks can be presented corresponding to the information corresponding to each sheet described above. With this configuration, each company can easily access the information of each company, the risk as the reflection of the unachieved item in the audit result is updated in real time, and each company can easily appropriately cope with risks in real time in comparison with the conventional audit common sense of fixed point observation such as once every few years. In addition, the mother DB has a model document that shows how to control, and by adopting a configuration that each company can access, there is also an opportunity for stakeholders to share an understanding of control, and it is configured to promote control more.

### 4.2. Second Embodiment

In the second embodiment, a system according to an embodiment of the present invention in a server-client format will be described.

The system according to the second embodiment will be described focusing on the differences from the system using the Excel (registered trademark) described above. In the system according to this embodiment, the aforementioned document sheet, profile sheet, assessment sheet, and score sheet are configured to be displayed on the terminal. In this case, it may be displayed in HTML format from the WEB and receive information, or it may be displayed on a dedicated WEB application and receive information. In addition, the information received by the terminal may be transmitted to a server and the calculation, determination, or the like performed on each sheet may be performed on the server, the calculated or determined information may be transmitted to the terminal and may be presented on the terminal, the calculation or determination may be performed by an application on the terminal using the received information and the calculated or determined information may be presented on the terminal, a part of the information received by the terminal may be transmitted to the server and the calculation or determination may be performed on the server, and the calculation or determined information may be transmitted to the terminal and the calculation or determination may be performed by the application on the terminal using the information received by the terminal, and the calculated or determined information may be presented on the terminal.

When the user starts the system of the second embodiment on the terminal, the information about the group to be audited is input. The information may be the same information as the profile sheet described above. Based on this information, the pass level of suitability of the group is determined for each maintenance/operation of each principle. The pass level of suitability for each maintenance/operation of each principle may be determined by using a table corresponding to Fig. 6 in the application on the terminal, and the information about the ABC group may be transmitted to the server, may be calculated and determined by using the table corresponding to Fig. 6 stored in the server and transmitted to the terminal.

Some or all of the information in the aforementioned document sheet, including the item relating to audit, may be presented on the terminal. In addition, the terminal may be configured to receive the information about suitability for the item relating to audit. In addition, in place of or in combination with the information about the suitability, the terminal may be configured to receive actual trail data. The trail data may be configured to be received and stored in association with the item relating to audit. The trail data is received in association with the item relating to audit and stored, and thus the trail data file having a vast amount of materials may be acquired to correspond to each item relating to the audit. In particular, by using the aforementioned associated memory and providing a search function using the item relating to audit as an indicator, the corresponding trail data can be easily acquired.

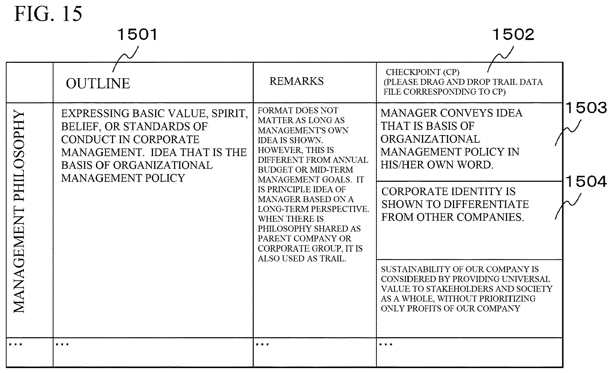

For example, Fig. 15 is a one-screen example of receiving trail data associated with an item. Similar to the document sheet, an outline 1501 and the like is presented, and a checkpoint 1502 is presented. Then, in the example of Fig. 15, a part of the screen describing the checkpoint is configured to be received by dragging and dropping the trail data file as it is. Specifically, regarding the items relating to the audit of "Management conveys the idea that is the basis of the organizational management policy in his own words", a user drags trail data as the information about the suitability for the item using an instruction device such as a mouse and drops the trail data on a description location 1503 of the item to receive the data file. As described above, the trail data includes files such as company motto, company policy, management policy, and slogan. In this way, by simply dragging and dropping the trail data onto the CP description so that the item is associated with the trail data file, a screen area on the terminal can be effectively used and trail data can be collected quickly.

As another example, regarding the item relating to audit of "Corporate identity is shown and differentiated from other companies", a user drags trail data as the information about the suitability for the item using an instruction device such as a mouse and drops the trail data on a description location 1504 of the item to receive the data file.

Here, the function of receiving trail data has been described, but as described above, it may have a function of receiving "o" or the like as the information about the suitability for the item. Further, in place of receiving the "o" of the information about the suitability for the item in the description of the aforementioned document sheet, the aforementioned trail data may be received. That is, by receiving the trail data, in the data table corresponding to the aforementioned document sheet, the CP suitability is set to "o", and the determination of the requirement suitability, definition suitability, and level suitability higher than the CP suitability may be determined in the same manner as the above configuration. With this configuration, a configuration equivalent to the level check sheet can be provided, and the result may be displayed.

When the input of the trail data ends, the information equivalent to the assessment sheet for each maintenance/operation of each principle may be presented. In contrast, the representative of the group to be audited inputs a level for each maintenance/operation of each principle. Note that as the terminal used by members of the group to be audited, a terminal for collecting and inputting trail data for audit may be the same or different from a terminal for inputting levels for each of the maintenance/operation of each principle by the representative of the group. Note that in the information screen corresponding to the assessment sheet, since it is preferable that a person in charge of collecting trail data cannot input a location to be input by the representative, a security code such as screen login corresponding to the document sheet may be differently configured from a security code such as screen login input by the representative.

Thereafter, the audit division of the parent company, which is an auditor, may be configured to confirm the trail data and input the confirmation result according to each item. As a result, the post-confirmation level of the audit division for each maintenance/operation of each principle is determined.

By the completion of all the above steps, the information corresponding to the score sheet may be presented. As a result, even in the server/terminal system, the user of the group to be audited can receive the information about the result of the audit of the group, and in order to execute the internal control more appropriately in the future, from this point of view of the maintenance/operation of each principle, it will be possible to formulate and implement measures appropriately. Note that the information input by the user regarding the audit and the information input by the audit division may be stored in the database as illustrated in Figs. 16 and 17 as described above, and may be configured so that each information can be listed as appropriate on My Page.

### 4.3. Third Embodiment

In a third embodiment, a system according to an embodiment of the present invention in the server-client format in the second embodiment will be described in more detail. Although the system according to the third embodiment overlaps with the system according to the second embodiment, the system is configured independent of the system according to the second embodiment, and the configuration of the system according to the second embodiment is not essential.

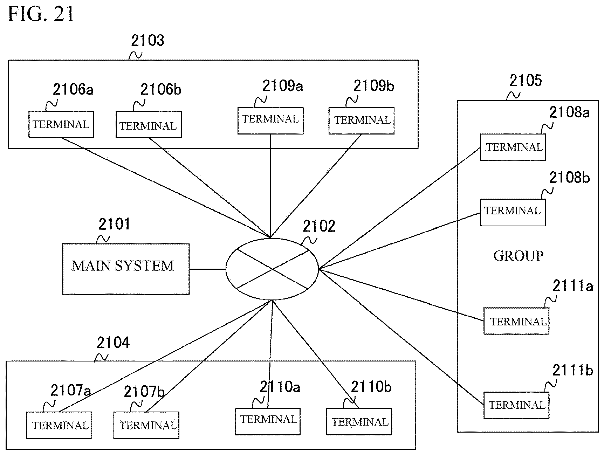

In the third embodiment, a main system 2101, a network 2102, and terminals 2106 to 2111 may be used, which will be described with reference to Fig. 21. In Fig. 21, groups 2103 to 2105 are illustrated with reference to a user of each terminal 2106 to 2111. The main system 2101 may be one information processing apparatus or a plurality of information processing apparatuses. In addition, the main system 2101 may also be a system using a cloud. In addition, a part or all of the main system 2101 uses hardware owned by another company, and may be configured to operate by renting the hardware and installing software. Further, when the main system 2101 is the cloud, a middle application may be a cloud system owned by another company, and the system according to the third embodiment may be installed and used as higher-level software thereon.

A group 2105 may be a relationship that capitally controls a group 2103 and a group 2104. Further, the group 2105 may be a group capable of controlling the decision-making body of a group 2103 and a group 2104. For example, the group 2103 and the group 2104 may be subsidiaries or sub-subsidiaries of the group 2105. In Fig. 21, only three groups of the group 2103, the group 2104, and the group 2105 are illustrated, but the system in the third embodiment may be connected to terminals relating to three or more groups, dozens of groups, or hundreds of groups through a network. When the group is in the environment that can be connected to the Internet, the system that can be used via the Internet has the advantage of being able to provide internal audit work in a unified standard even for groups operating in different locations or small groups with few funds and resources. In particular, small corporate or corporations acquired through M&A and the like may have low funds, and may be difficult to build a system for internal audit by themselves. Therefore, there is an advantage that the system via the Internet can be provided as a system for uniformly applying the standard to each company in the corporate group.

Terminals 2106 to 2108 are assumed to be terminals used by an auditee, and terminals 2109 to 2111 are assumed to be terminals used by an auditor. In the group 2103, terminals 2106a and 2106b are separately described as terminals to be used by the auditee, and it is assumed that there are multiple business divisions of the group 2103, for example and there are the terminals 2106a and 2106b corresponding to each business division. The same applies to terminals 2107a, 2107b, 2108a, and 2108b in the group 2104 and the group 2105. The number of terminals is not limited to 2, and may be 1 or 3 or more. In addition, the number of business divisions and the number of terminals do not have to correspond to each other. The reason that for example, in group 2103, terminals 2109a and terminal 2109b are described separately as terminals used by an auditor is that it is assumed that there are multiple auditors in group 2103, for example. The same applies to terminals 2110a, 2110b, 2111a, and 2111b in the group 2104 and the group 2105. The number of terminals is not limited to 2, and may be 1 or 3 or more. As multiple examples, there are an auditor, an internal audit division, a personnel division, an IT division, and the like as described below. However, when one division shares the roles of these multiple divisions, such as corporate with a small number of people, one terminal may be used. In Fig. 21, both the terminal used by the auditor and the terminal used by the auditee are described in each group, but any one thereof may be used. That is, as terminals in one group, there may be one or a plurality of terminals used by the auditor and there may be no one or a plurality of terminals used by the auditee, or as terminals in one group, there may be one or a plurality of terminals used by the auditee and no one or a plurality of terminals used by the auditor.

Here, the case where the group 2103 is a subsidiary company of the group 2104 and a sub-subsidiary company of group 2105, and the group 2104 is a subsidiary company of group 2105 is considered as an example. First, for terminals 2106a and 2106b used by a user on a business side who undergoes the internal audit relating to the group 2103, an auditor in group 2103 who primarily evaluates the business side may use terminals 2109a and 2109b. At this time, all the terminals 2106a, 2106b, 2109a, and 2109b are terminals of the same group 2103. In addition, for the terminals 2106a and 2106b used by the user on the business side who undergoes the internal audit relating to the group 2103, an auditor in group 2104 which is a parent company which secondarily evaluates the business side may use terminals 2110a and 2110b. At this time, the group 2103, which is a group relating to the users of the terminals 2106a and 2106b, becomes a subsidiary company of the group 2104, which is a group relating to the auditors of the terminals 2110a and 2110b. In addition, for the terminals 2106a and 2106b used by the user on the business side who undergoes the internal audit relating to the group 2103, in place of or in addition to the group 2104, the auditor in the group 2105 which is a parent company which secondarily evaluates the business side may use the terminals 2111a and 2111b. At this time, the group 2103, which is a group relating to the users of the terminals 2106a and 2106b, becomes a sub-subsidiary company of the group 2105 which is a group relating to the auditors of the terminals 2111a and 2111b. In this way, when the first group can control the decision-making body of the second group, in particular, when auditing ability is low or lacking due to a small group of the second group, and the like, the proper business of the second group is guaranteed by the audit by the first group, and thus the second group benefits. In addition, when the first group has a consolidated relationship with the second group, the second group performs proper business, and thus the first group also benefits. In addition, when the first group can control the decision-making body of the second group, even if the second group is an independent corporation, there is legitimacy that the first group can audit the business contents of the second group.

Also, as described below, information about suitability for items relating to internal audit, such as trails, is input from the terminals 2106a and 2106b and stored in the main system 2101 via a network 2102. The information such as the trail can be listed independent of the terminals 2109a, 2109b, 2110a, 2110b, 2111a, and/or 2111b. That is, the information is transmitted to terminals 2109a, 2109b, 2110a, 2110b, 2111a, and/or 2111b, and can be displayed on display units of the terminals 2109a, 2109b, 2110a, 2110b, 2111a, and/or 2111b.

Here, a primary evaluator and a secondary evaluator will be described in more detail. A corporate has a function of voluntarily managing and monitoring the business of the corporate. For example, there may be auditors auditing the execution of duties by directors, accounting auditors auditing accounting documents, internal audit divisions auditing businesses, and common management divisions managed from the perspectives of each division (hereinafter, within corporate, these divisions are referred to as "audit-related divisions"). Here, the common management division includes, but is not limited to, a personnel division, a general affairs division, a legal division, an IT division, and the like. The aforementioned auditor may be a person belonging to the audit-related division. The business within the corporate is audited from the audit-related division. The person in charge that conducts a business within the corporate and is subjected to the aforementioned audit is sometimes called the auditee.

Here, as described above, the audit can be maintained from the viewpoint of the maintenance and operation, but another example of the work to be audited will be described. When business is conducted, an approval system (separation of a creator of documents and settlements from an approver of these documents and settlements, rules of an approval route according to a target amount · rules for creating a trail regarding approval) within an organization are necessary for maintenance, and the actual operation (whether relevant staff members know rules, whether rules are followed, whether a trail indicating that the rules are being performed is created, and the like) needs to be conducted. In addition, the document management system (for example, as rules regarding the handling of documents, whether or not it is necessary to store documents in a designated location with a key according to a confidentiality level of documents, whether or not the documents can be printed, and rules of authority to take documents out of designated locations) are necessary for maintenance, and the actual operation (whether the relevant staff members know rules, whether the operation is actually performed, or whether the procedure is recorded) needs to be performed. In this way, regarding the maintenance, the regulations, provisions, rules, and the like of the specific system are necessary, and regarding the operation, study sessions are held to inform the relevant staff members, there are materials for study sessions, or a document for recording during the operation is required. Such documents such as regulations, provisions, rules, holding notification of meetings such as these study sessions, holding minutes of meetings, meeting materials, documents of related records, and the like are examples of trails.

In this way, there are various trails relating to maintenance and operation. Since it is necessary for each audit-related division to confirm various trails from their respective perspectives, the auditee has modified and submitted such a trail in a form suitable for the response to each audit-related division as appropriate according to the request from each audit-related division. For example, regarding the GDPR, which is the General Data Protection Regulation that came into effect in May 2018, the auditor and internal audit whether the system or operations have been changed to prepare for the enforcement of the GDPR, the personnel division of the common division needs to confirm whether the handling of personal information has been changed to the GDPR-based system and operation from the viewpoint of personal information, and the IT division needs to confirm whether the handling of information processing has been changed to the GDPR-based system and operation. Therefore, the auditee needs to respond to each of these requests.

Therefore, in the system of this example, a plurality of auditors belonging to a plurality of different audit-related divisions may be configured to access these trails. For example, in the system of this example, it is possible to independently transmit the information about legality to the terminal relating to the first audit division and the terminal relating to the second audit division different from the first audit division. Further, in the system of this example, the terminal relating to the first audit division and the terminal relating to the second audit division can independently display the information about the legality. Here, the independent transmission may mean that the transmission to each terminal does not have a dependency relationship. In addition, the independent display may mean that the display on each terminal does not have the dependency relationship. In this way, when information A about suitability for items relating to internal audit is input from the terminal relating to the first division, the information A may be displayed by the display units of the terminal relating to the first audit division and the terminal relating to the second audit division, respectively, and there is an advantage that the procedural burden of the person in charge of the first group responding to the request of the information A from each of the first audit division and the second audit division is reduced.

The main system 2101 may be provided with functions corresponding to each unit such as the document unit 31, the profile unit 32, the level check unit 33, the assessment unit 34, and the score unit 35, which are mainly described in detail in the first embodiment. Further, the terminals 2106 to 2111 may have an input function and a display function for these units.

Next, the screen transitions that the system of this example can display on the screens of terminals 2106 to 2111 will be described. Here, the screens used by the auditor and the auditee are described as common, but different screen configurations may be used. In addition, when the group to which the auditor or the auditee belongs is a group having a controlled group controlled by a decision-making body such as a subsidiary company, the set of the controlled groups is referred to as a corporate group here. Note that even if the group to which the auditee belongs is in a position to be audited by the parent company, the group to which the auditee belongs may have a corporate group as the parent company.

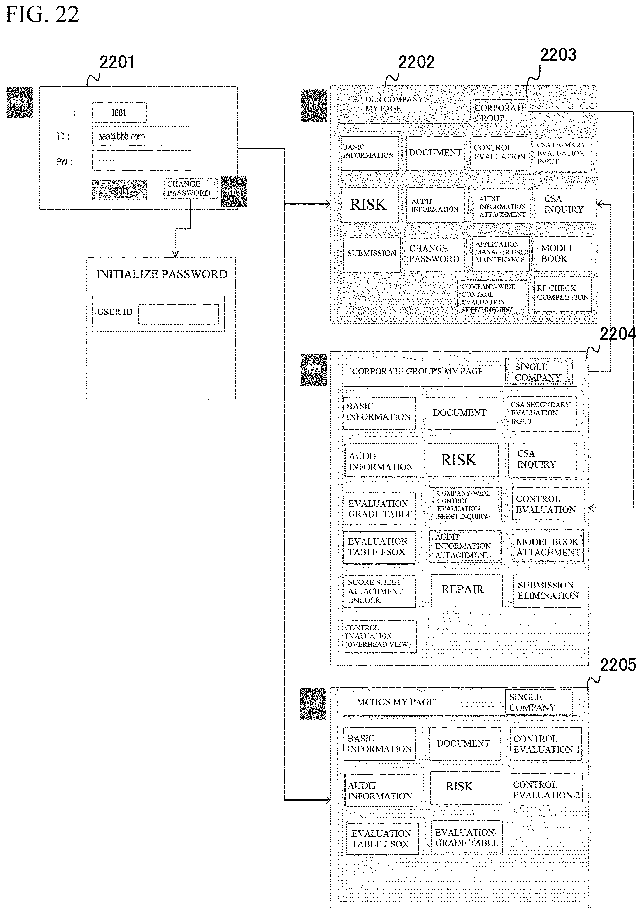

Fig. 22 is an example of a page that appears after logging in to the system. It is possible to input ID and password on the login screen 2201. When these are input, the system is logged in. It is also possible to change the password, such as initializing the password. The page after login is basically moved to our company's my page 2202. Note that buttons that can move to various pages relating to audit are displayed on our company's my page. The migration destination and specific contents of each button will be described later. In this way, each information about audit can be easily accessed and is displayed in a centrally understandable manner. In this way, it is possible to input or modify a variety of basic information about related corporate and information about audit, submit evaluations, or display various types of reference information.

When the group to which the user belongs has a corporate group, the button of the "corporate group" 2203 may be displayed. When the button of the corporate group is clicked, my page 2204 for corporate groups is displayed. It is possible to search, display information about, or evaluate the corporate belonging to the corporate group of the user corporate.

In addition, if the use corporate is a corporation that stands at the top of each company in the capital relationship, it may have a special function that can display the overall evaluation results for each affiliated company. Here, it is displayed as my page 2205 for MCHC. This makes it possible to understand and display the overall trend regarding the overall trend of dozens or even hundreds of corporations.

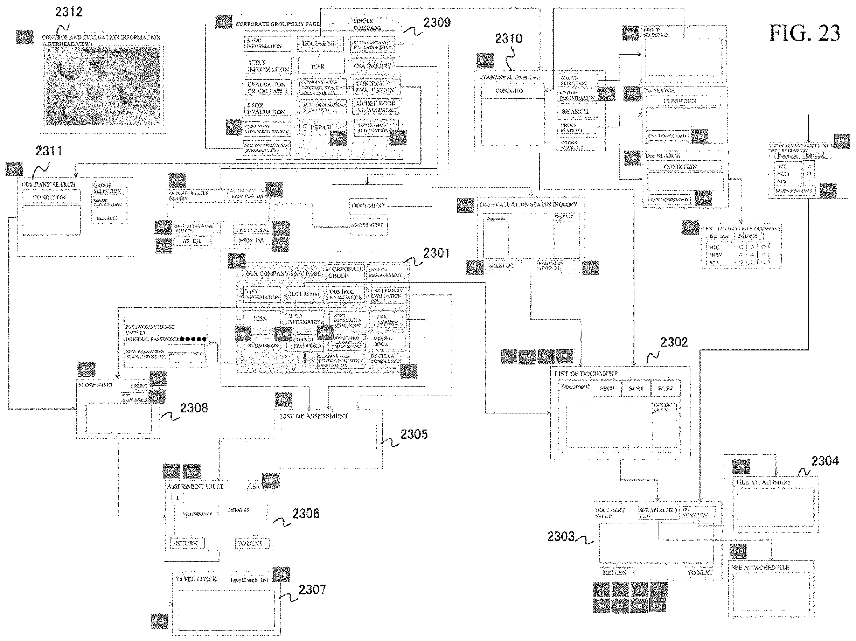

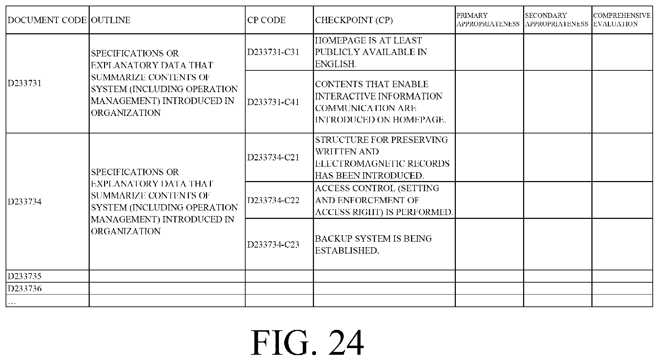

Next, our company's my page and the corporate group's my page will be specifically explained with reference to Fig. 23. On the "document" screen on the screen 2301 of our company's my page, the function of the document sheet described in the first embodiment is provided. Here, to briefly supplement some of its functions, when the "document" is clicked, the document list screen 2302 is displayed. Here, a list of documents in the document unit described in the first embodiment is displayed. Fig. 24 is an example of a list of documents. The system of this example has a database relating to the list of documents, and can display the list of documents on the document list screen 2302. By displaying the list of documents, it is not necessary to review all the documents in order or attach the files described later, and the desired documents can be directly selected. When the document or the document code is selected, the checkpoints included in the document can also be selected. The user can attach a file that serves as a trail on a screen 2304 attached to the corresponding checkpoint while referring to the explanation on the screen 2303 for the selected document or checkpoint in the document. For the attached files, the system of this example associates the selected checkpoint for the selected document with the attached file and records it in the database. At this time, the file may be changed to the file name corresponding to the checkpoint and recorded. By clicking "next" on the screen 2303, the next checkpoint in the document or the explanation screen 2303 in the next document may be displayed. This also makes it possible to attach trail files corresponding to checkpoints in the initial order.

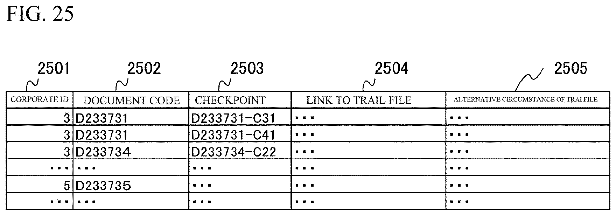

Fig. 25 is an example of a database in which trail files are recorded in association with checkpoints. In Fig. 25, for the corporate ID2501 indicating each corporate, it is illustrated in which document code 2502 the checkpoint 2503 is taken as a trail file 2504. In addition, there is also a column for alternative circumstances 2505 for trail files. This is because, as described in the first embodiment, trail data is not always required to be suitable for the checkpoint, and instead of the trail, the checkpoint may be suitable if there is any explanation. Therefore, as the information about suitability for the item, the description for the item may be used. In that case, instead of the trail, description information about the checkpoint may be input at the terminal, and the information may be received and stored in the storage unit.

Note that in the description of this database, security and the like are described without being considered for the sake of clarity, but methods for strengthening security may be applied and the system can be operated more efficiently.

Here, another example will be described regarding the relationship between checkpoint, which is an example of an item relating to audit, and definition, which is an example of a higher-level item. The principles of the internal control are abstract, and the specification thereof is described above. In this regard, it is preferable that the checkpoint, which is the smallest unit for the internal control, is an item that allows the auditee in charge of audit response at each company to judge the appropriateness without misunderstanding. Therefore, it is preferable that the item is closely relating to the internal business. For example, when what is in what situation, for the item "internal information transmission is effective", it may not be possible for the auditee in charge of audit response to judge whether information transmission is effective. The content is a matter of degree, and although it may be possible to take action by describing the specific meaning in a manual for related items, it becomes easier to understand by being specifically described. For example, the item of definition 1 "Internal information transmission is effectively performed" is preferably set as the following sub-item of the above definition 1 and more specific items.
(1) Matters necessary for organizational management such as laws and regulations can be identified,
(2) In-house inter-organizational communication system is maintained, and
(3) Risk management in department meeting is being discussed.

In this case, if all of the items (1) to (3) are satisfied, the item of definition 1 is satisfied.

In addition, the significance of making such a specific item has the following technical points. For example, regarding the other item of definition 2 "holding a system corresponding to organizational management risk", a checkpoint of a sub-item of the above definition 2 is set the following contents and the specified item.
(4) A risk management control department has been set up.
(5) Risk exhibition is performed regularly.
(2) In-house inter-organizational communication system is maintained.
(6) The results are reported to management.

In this case, if all the items (4), (5), (2), and (6) are satisfied, the item of the definition 2 is satisfied.

Here, the sub-item (2) is the sub-item of the definition 1 item and at the same time the sub-item of the definition 2 item. That is, one sub-item is set as a checkpoint of multiple higher-level items and as a common item. One of the advantages of this configuration can effectively perform judgment by combining checkpoints as already defined items with respect to the definitions as items of internal audit that will be newly formulated in the future. For example, since the trail corresponding to the already set checkpoint has already been input by each company, and is held in the system of this example, there is a possibility that the auditees of each company may not increase the burden of new audit response in response to the new definition. In addition, even if the auditees of each company need to respond to the audit, as mentioned above, since the definition of the higher item uses the checkpoint which is the default sub-item, the auditee only needs to respond to the newly added checkpoint, reduces the recognition that the auditee is performing similar audit response work, maintains the incentive for the audited person, and efficiently responds to the audit.

Describing from the technical point of view described above, regarding the definition as a newly created internal audit item such as in the future, the information about suitability for checkpoint as an already defined item, for example, the trail can be reused for judgment. This is an advantage that the required storage amount can be reduced because it is not necessary to store a new trail as data compared to the case where a new trail is stored as data each time a new internal audit item is created. As described above, in the system of this example, the internal audit support system in which the first judgment unit uses the information about suitability for the first sub-item, which is the sub-item of the first item relating to internal audit, to judge suitability for the first item, and the first judgment unit uses the information about suitability for the first sub-item to determine suitability for the second item different from the first item technically is a system that reduces the amount of storage relating to the storage of information about suitability such as trails for common items, avoids the storage of useless data, and enables efficient use of the storage unit, maintains the incentive of the auditee, and performs the efficient audit response work.

Note that the suitability determination described above corresponds to o for the primary appropriateness relating to the checkpoint for the sub-items and o for the definition. In the system of this example, as another aspect, the suitability determination for the item may be determined by whether or not the information about suitability is stored in association with the item. For example, when the information about suitability is stored in association with the sub-item, it is determined that the sub-item is suitable, and when the information about suitability is not stored in association with the sub-item, it is determined that the sub-item is not suitable. As described above, the information about suitability may be, for example, a trail or may be information in place of a trail. In addition, the information about suitability may be stored by receiving the information input from the auditee's terminal. Note that in this way, determining suitability based on the stored information about suitability does not completely exclude the possibility that inappropriate information is stored. However, the auditee can input the information about suitability that may be suitable by inputting information about legality or referring to manuals, descriptions, or the like. In addition, when the auditee intentionally does not input the information about suitability, as will be described later, since the evaluation by the first evaluator is conducted after that, the submission of the information about suitability may be required for items that are not suitable. Therefore, in practice, even the above system is sufficiently convenient.

Returning to Fig. 23, regarding the aforementioned input document, it is possible to submit the material to the auditor by clicking "submission" on the "our company's my page" screen 2301.

Next, the "CSA primary evaluation input" on the screen 2301 of "our company's my page" corresponds to a part of the function of the assessment sheet in the first embodiment. Here, to briefly supplement some of its functions, when the "CSA primary evaluation input" is clicked, the screen 2305 of the "assessment list" is displayed. In the assessment list, those showing the maintenance/operation of each principle of the assessment sheet described in the first embodiment are displayed. When the maintenance/operation for one principle is selected therefrom, the maintenance or operation will be displayed on the screen 2306 of the assessment sheet. In addition, when you want to know the details of the evaluation of the assessment sheet, the details can be seen on the screen 2307 of the level check sheet.

The system of this example implements the specific functions of the assessment sheet and level check sheet in the first embodiment, and thus may be configured to display the maintenance/operation of each principle or display a level check sheet for investigating the cause when the evaluation is unexpected.

Specifically, the system of this example makes the determination according to the logical configuration of the level check sheet described in Fig. 11. More specifically, if a trail file corresponding to a checkpoint is acquired or the description thereof is acquired within a predetermined period, the checkpoint is judged to be suitable. When all the checkpoints included in one document are judged to be suitable, the requirement suitability corresponding to the one document is judged to be suitable. In addition, when the requirement suitability for all the documents included in one LD code is determined to be suitable, the definition suitability corresponding to the one LD code is determined to be suitable. Then, when all the definition suitability corresponding to one level in one control category is determined to be suitable, the level suitability corresponding to one level in the one control category is determined to be suitable. Here, the configuration in which each checkpoint, requirement, definition, and level is determined has been described, but the primary evaluator or the secondary evaluator may set different contents from the determined result for each determined location. In that case, the above determination may be made based on the set contents for the upper layer above the target, and finally the result of the level suitability may be set.

When the system of this example has the above configuration, it is possible to specify the checkpoint that causes the level suitability of one level in one control category not to be suitable. Therefore, on the screen of the level check sheet 2307 in Fig. 23, in the level suitability that is not suitable, the checkpoint that is not suitable may be displayed in the different state from the check point that is suitable, or only the checkpoint that is not suitable may be displayed as one list. With such a display, the user can easily understand the checkpoints that are not currently suitable in order to reach the next higher level (next target level) with respect to the level that is suitable in the assessment sheet.

When one principle/operation to be targeted is input by clicking "CSA primary evaluation input", the evaluation can input in the screen 2306 of the assessment sheet in Fig. 23, and the system of this example may acquire the evaluation result and store the evaluation result for the one principle/operation.

Even when the "CSA inquiry" on the screen 2301 is clicked, it is possible to move to the screen 2305 of the "assessment list" and view the assessment sheet, the level check sheet, or their contents in the same way as described above, and the system of this example may display the assessment sheet, the level check sheet, or the contents described in these. As mentioned above, when the evaluation is made by the primary evaluator, the system of this example may also display the evaluation result.

When the "control evaluation" on the screen 2301 is clicked, it moves to the screen 2308 of the "Score sheet" is displayed, and the score sheet in the first embodiment or the contents described in the sheet may be displayed. In addition, the contents for each company may be described here. The contents for each company are not limited to the matters of the internal audit, but may include numerical information including other risks. Other risks may include un-evaluated or low levels such as level 1 in internal audit as well as matters indicated in internal audit, accident problems specific to the company, and accident problems common to certain companies that are not limited to the company, and/or matters identified as risks, and the like. These other risks may be contents from a different perspective than the maintenance/operation of the 17 principles in the internal audit. In addition, these other risks may also be quantified for each target. The quantification method may be configured so that, for example, each object has a classification associated with a certain numerical value, and the numerical value in which each target is compared with the classification may be specified. For example, when taking the example of the accident problem, a database in which numerical values are assigned according to the type of accident may be provided, and using the database, the configuration may be such that numerical values are applied according to the type of target accident. The numerical value may indicate the degree of influence for risk. In addition, other risks may be weighted by the frequency of risk. For example, with regard to the frequency, it may be configured to specify a numerical value that is weighted with respect to a specific risk frequency by using a database that associates the number of risks that occurred within a predetermined period with a weighted numerical value. As a result, a numerical value for the one risk can be derived by multiplying a numerical value according to the type of the risk by a weighted numerical value based on the frequency of the risk. As a result, for each risk held by a certain group, numerical values may be derived by multiplying a numerical value according to the type of risk by a weighted numerical value based on the frequency of the risk and summed, thereby deriving numerical values for all the risks. The numerical values for all risks are considered to be quantitatively quantified so that qualitative risks can be evaluated or compared concretely. Then, the numerical results obtained by subtracting the numerical values for all the risks from the numerical value of the audit evaluation result of a certain group may be displayed for the group. The subtracted numerical results can be considered to be derived from internal audits such as COSO or J-SOX, taking into account the risks detected from other perspectives. In other words, although the internal audit is rational, since there is no an absolute guarantee, by considering risks based on other perspectives, the risk including the field can be quantified and displayed, and the actual risk including the field can be displayed, so the person in charge or the like can understand the risk. Note that the numerical information may be configured to be displayed in various ways such as ranking and alignment, similar to the evaluation result numerical values of the following internal audit.

In addition to/instead of such numerical information, the indication matters of the specific audit for each company or the information about the risk exhibition may be presented. In addition to/instead of numerical information, the indication matters of audit may be abstract, such as what the auditor noticed in conducting the audit, or comments/advice on the overall direction/guideline, or may be comments/advice on the specific contents such as regulations, rules, meetings, procedures, and operations. By presenting the above information to each company, each company can strengthen risk efforts.

Next, a screen 2309 of "my page for corporate group" will be described. The information about other corporate that can be audited by own company can be viewed and audited on the "my page for corporate group". By clicking "documents" on the screen (2309), companies to be audited can be searched and trails can be viewed. On the screen 2310, it is possible to search for companies within the group and to perform a "horizontal skewer search" based on a specific time point. In the "horizontal skewer search", a list on whether there is the trail relating to the company to be audited and relating to the specific document can be viewed or a list on whether the CP appropriateness relating to the specific document can be viewed.

The system of this example includes a database of the association of the audited company with the auditing company, and also a database of the contents described in the document sheet such as control category, level, definition, document, and checkpoint for each company, so these functions enable, for example, a relational database to list specific checkpoints of an audited company for a single auditing company. The association of the audited company with the auditing company will be clarified by the group to which each company belongs, which will be described later. For example, if the affiliated group is MCC, it may be audited by the MCC, and if the affiliated group is MTPC, it may be audited by the MTPC. In addition, all companies may be audited by the MCHC under the affiliation of the MCHC.

A company having a corporate group can input a secondary evaluation for the trail input by the company to be audited and the subsequent evaluation by the primary evaluator, in the "CSA secondary evaluation input" on the screen 2309. The secondary evaluation is input by searching the document and reviewing the trail for the company to be audited, and thus, the secondary evaluation is completed. In addition, in the "CSA inquiry" on the screen 2309, similarly, the company to be audited is searched (2311), and on the screen 2308 of "Score sheet", the score sheet or the contents described in the sheet can be viewed. For each company, the contents of the assessment sheet, the level check sheet, and the score sheet described in detail in the first embodiment are recorded in the database, and based on the database in which the auditing company is associated with the audited company, it is possible to display a part or all of the contents of the assessment sheet, the level check sheet, and the score sheet of the audited company corresponding to the auditing company.

On the screen 2309, the "acceptance" is a function that the auditing company recognizes, as the final version, what was submitted by the audited company. When the "acceptance" is acquired from the auditing company, the system of this example records the assessment sheet or its contents as the final version.

On the screen 2309, "submission release" means that the auditing company instructs the audited company to reconsider what was submitted by the audited company. The audited company will be required to take measures such as entering a new trail into the system or changing the evaluation of the assessment sheet for the document.

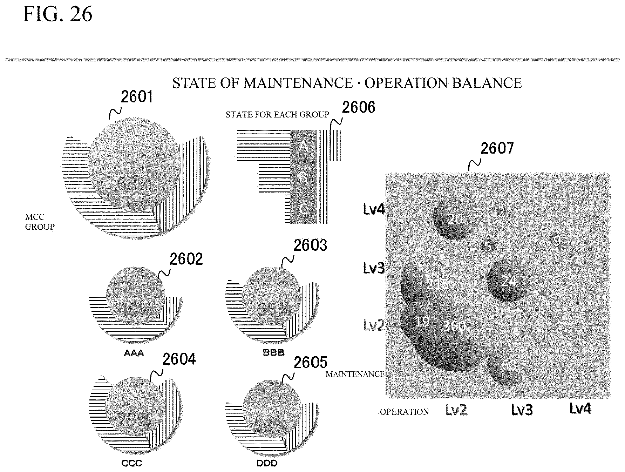

On the screen 2309, the tendency of the "control evaluation (overhead view)", not only the individual audited company but the entire corporate group owned by the company, is displayed. This will be described in more detail with reference to Fig. 26. Fig. 26 is an example illustrating the evaluation of the corporate group, and the MCC is an example of the corporate group. Diagram 2601 illustrates the trends of MCC as a whole. The value of 68% is a numerical value indicating a compliance rate of audits in the MCC group, which includes MCC and subsidiary companies of the MCC. The numerical value indicating the compliance rate is a numerical value indicating the ratio of whether or not each company has passed the audit. In addition, a diagram shown by a horizontal line pattern and a diagram shown by a vertical line pattern, which are a part of a fan shape hung downward from the side of the circle in diagram 2601, each show the relationship between the maintenance and operation. In other words, it is configured to display an area ratio corresponding to each maintenance/operation according to the evaluation ratio of the maintenance/operation of each company in the group. The evaluation ratio of the maintenance/operation of each company in the group may be calculated based on the evaluation ratio of the maintenance/operation of each company in the group. At the time of calculation, each company may be calculated without weighting, or may be calculated by weighting according to the number of personnel, sales, and the like. Diagrams 2602 and 2605 show a status of subsidiary companies of the MCC Group. Similar to diagram 2601, these subsidiary companies also have more subsidiary companies, and as described above, the compliance rate and the evaluation ratio of maintenance/operation are shown. For example, in diagram 2602, for a corporate group including company AAA and its subsidiary companies, the compliance rate is calculated as 49%, and the evaluation ratio of the maintenance/operation is shown as the area ratio.

A viewer can understand the compliance rate and the evaluation ratio of the maintenance/operation for a corporate group including our company and its subsidiary companies from diagram 2601. In addition, from Figs. 2602 to 2605, it is possible to understand the compliance rate and the evaluation ratio of the maintenance/operation for the corporate group in the subsidiary company of our company, and it is possible to understand the history. Therefore, there is a high evaluation such as 79% in diagram 2604, but it can be seen that there are objects to be watched, such as 49% of company AAA in diagram 2602 and 53% of company DDD in diagram 2605. By displaying with such a configuration, there is the advantage of making it easier to give specific instructions more accurately in order to strengthen internal audits in the future.

ABC in diagram 2606 is the aforementioned ABC group, and shows the classification to which each company belongs. In each group, the degree of achievement for the maintenance/operation is expressed by the lengths of the left and right horizontal bars, and as described above, the horizontal line pattern indicates maintenance and the vertical line pattern indicates operation. In diagram 2606, the situation of each group regarding the balance between the maintenance and operation can be understood.

Diagram 2607 shows the aggregated results at the maintenance and operation levels. For each company, the average level of the maintenance and the average level of the operation are calculated, and the total number thereof is displayed. Note that diagram 2607 shows an example in which the level is not necessarily an integer value and may be a numerical value such as 2.5 or 3.5.

Instead of the compliance rate of the audit, it may be a numerical value indicating the comprehensive evaluation of all companies in the group. The numerical value indicating the comprehensive evaluation may be calculated by scoring the current evaluation when the highest evaluation is given to each company in the group as 100%, and then may be calculated by the median value, the mode value, the representative value, the geometric mean, the arithmetic mean, the harmonic mean, the weighted mean, the trimmed mean, the Winsorized mean, or the like using the numerical values corresponding to each company.

In addition, for each company, the maintenance level and operation level each may be numerical values that are calculated by arithmetic such as the median value, the mode value, the representative value, the geometric mean, the arithmetic mean, the harmonic mean, the weighted mean, the trimmed mean, the Winsorized mean. With the above configuration, the viewer can easily grasp the overall tendency shown in the above arithmetic. In addition, depending on the display result, the viewer can provide each company with specific instructions such as strengthening internal control, and the possibility of reducing future risks increases.

In addition, the screen in Fig. 26 is information about the MCC group, but may be a screen that can be viewed by MCHC company of its parent company. In other words, when the MCHC views this screen, the subsidiary companies AAA, BBB, CCC, and DDD within the MCC group are sub-subsidiary companies of MCHC. In this way, the system of this example may be configured so that information about the sub-subsidiary company can be displayed on the terminal. By displaying the statistical information about the corporate group owned by the subsidiary company, the viewer can easily grasp the overall tendency of the corporate group owned by the subsidiary company. As a result, depending on the viewing result, the viewer can provide subsidiary companies with specific instructions such as strengthening internal control of each company in the corporate group owned by subsidiary companies, and the possibility of reducing future risks increases.

In addition, the information about a group having a controllable decision-making body, such as information about a sub-subsidiary company of a subsidiary company or information about a sub-subsidiary company of a sub-subsidiary company, but not limited to a sub-subsidiary company, can be displayed. As a result, it is possible to grasp information about groups that have a controllable decision-making body, such as when grasping the situation regarding corporate newly purchased through M & A, and it is highly likely to reduce the future risks by specific instructions such as strengthening internal control.

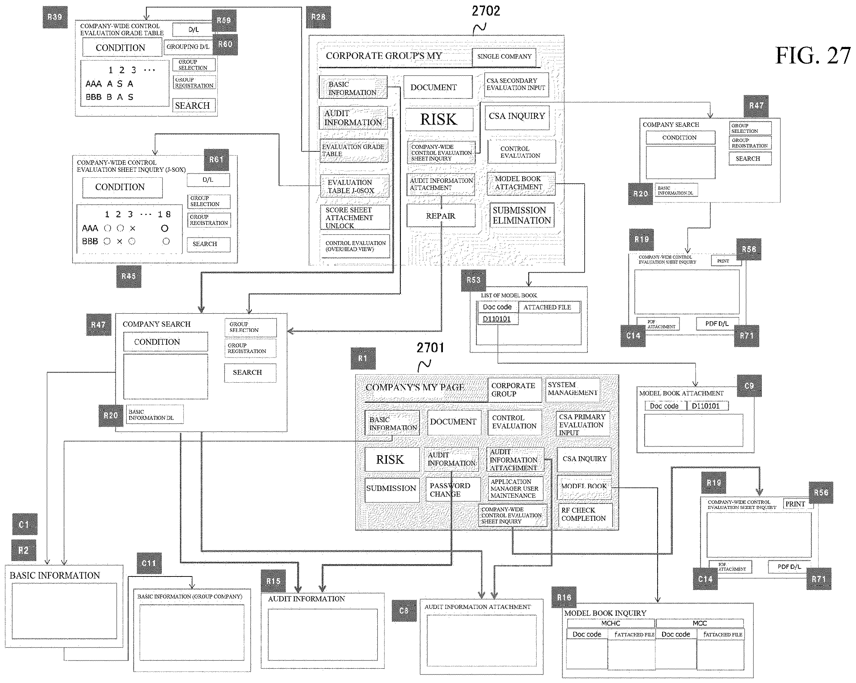

Next, other displays of the company's my page and the corporate group's my page will be specifically described with reference to Fig. 27.

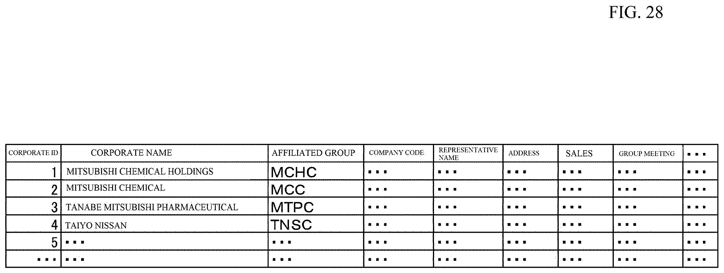

On the screen 2701, the "basic information" has a function of displaying basic information about the company. The contents described in the profile sheet in the first embodiment may be displayed. In addition, the database may be provided so that such information can be displayed. Fig. 28 is an example of the database regarding the basic information.

On the screen 2701, the audit information in "audit information" can be viewed.

On the screen 2701, the "model book" shows an example of a trail. Depending on the items relating to the internal audit, when the trail that should be required cannot be understood, the understanding may not be shared. When a person in charge misunderstands the trail, even though the person in charge tried to proceed properly with respect to the relevant item, only the trail inappropriate for the internal audit can be obtained, and it is not suitable for the audit. In this example, the configuration that allows the system to present a model book provides information that is suitable for the audit. For example, there are items to be determined and specific examples that are suitable when determined. In a meeting, for example, meeting items, attendees, timing, decision matters, scope of decision matters, format of meeting minutes, and the like may also be in the model book. In addition, the model book may be configured to display different examples with different degrees of suitability, from the viewpoint of auditing, such as the most favorable, recommended, and unfavorable examples. As a result, there is the advantage that the user can carry out the work according to the specific case while understanding the favorable and unfavorable examples from the viewpoint of auditing.

In addition, the format for trail files may also be provided. That is, the system may be configured to transmit the format for the item so that the terminal relating to the audited division can acquire the format. As a result, the person in charge of the audited division has the advantage of being able to efficiently create a trail that is suitable for the audit by using this format.

In addition, in Figs. 22, 23, and 27, all the buttons are displayed and the page of the migration destination is displayed, but the buttons relating to the migration destination without authority are not displayed according to the user's ID, or cannot be migrated to the migration destination even if displayed in a different manner from the migratable button or displayed in the same manner as the migratable button. The presence or absence of authority may be stored in association with the user ID, and based on the information of the user ID, the display mode of the button as described above or the possibility of migration to the migration destination may be determined. In particular, in the same group, the business side that is a side to be audited and the division that conducts the primary audit may have different IDs and different authorities. Therefore, the user ID may be issued and managed according to the accessible authority.

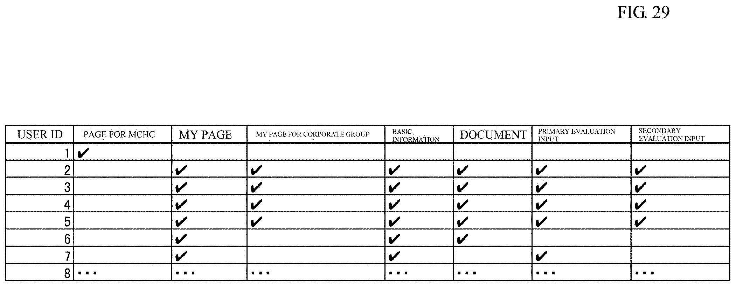

For example, Fig. 29 is an example of a database that records the authority relating to the migration screen according to the user ID. The access authority is recorded for each user ID and for each type of information. The target for which access authority can be set may be for each button or for each page. In addition, the target for which the access authority can be set may be the display screen or each specific search target in the display screen.

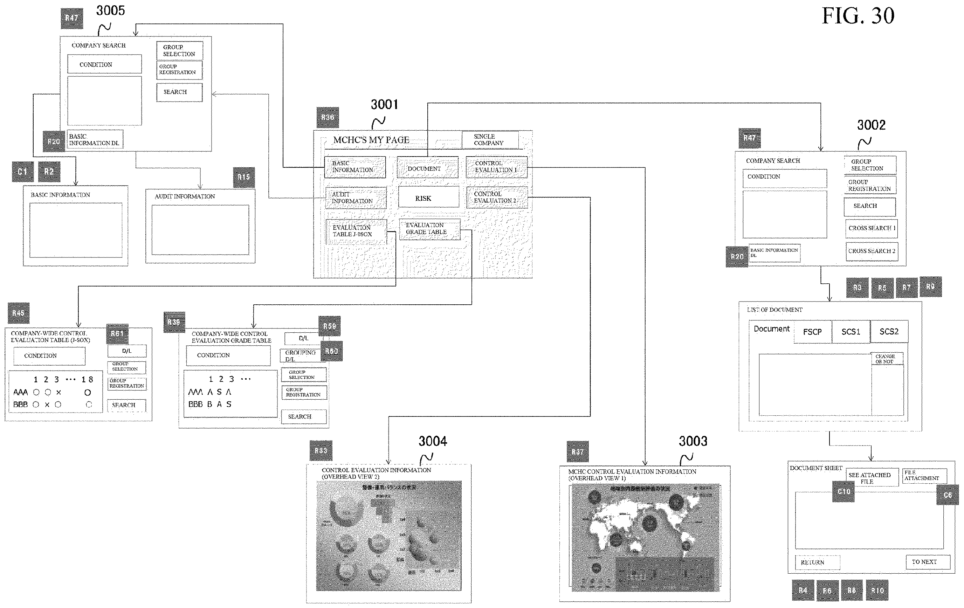

Next, the MCHC my page will be described with reference to Fig. 30. Since the MCHC company is located at the top position of the corporate group and is a group that controls each company of the affiliated companies, a screen 3001 of the MCHC my page is configured so that the information of each company in the corporate group can be viewed.

A screen 3002 can search for information about suitability for items relating to each company's internal audit. For example, it is possible to search for trails.

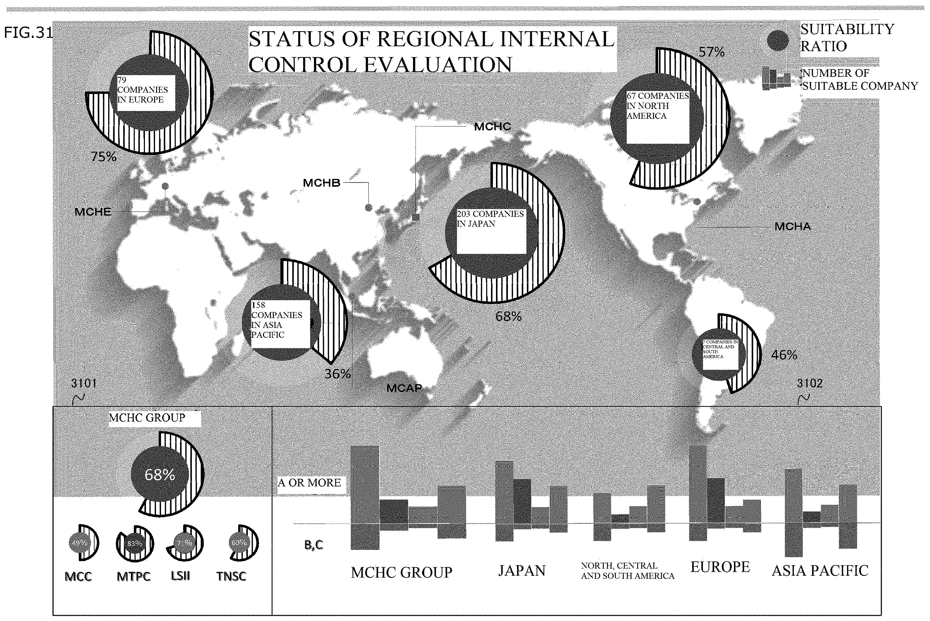

The screen 3003 displays a bird's-eye view of the evaluation information. This is an aspect of displaying the regional internal control evaluation, which will be described with reference to Fig. 31.

In Fig. 31, the number of companies and the compliance rate are displayed for each region. For example, Japan has 203 companies with a compliance rate of 68%, and North America has 67 companies with a compliance rate of 57%. Such a display makes it easier to understand the region where the compliance rate is high and the region where the compliance rate is low for each region. In 3101 at the lower left, the compliance rate of the entire MCHC group and the compliance rate of each affiliated corporate group are displayed. In addition, in 3102 at the lower right, the group to which each company belongs is divided into A group and BC group in the entire MCHC group and each region, and the number of companies suitable for each is displayed in a bar graph. In this way, group A and group BC are divided for each region to make it easier to understand the number of companies that are suitable.

Returning to Fig. 30, the screen 3004 is the same as that illustrated in Fig. 26 described above. In addition, information about various companies can be searched on the screen 3005.

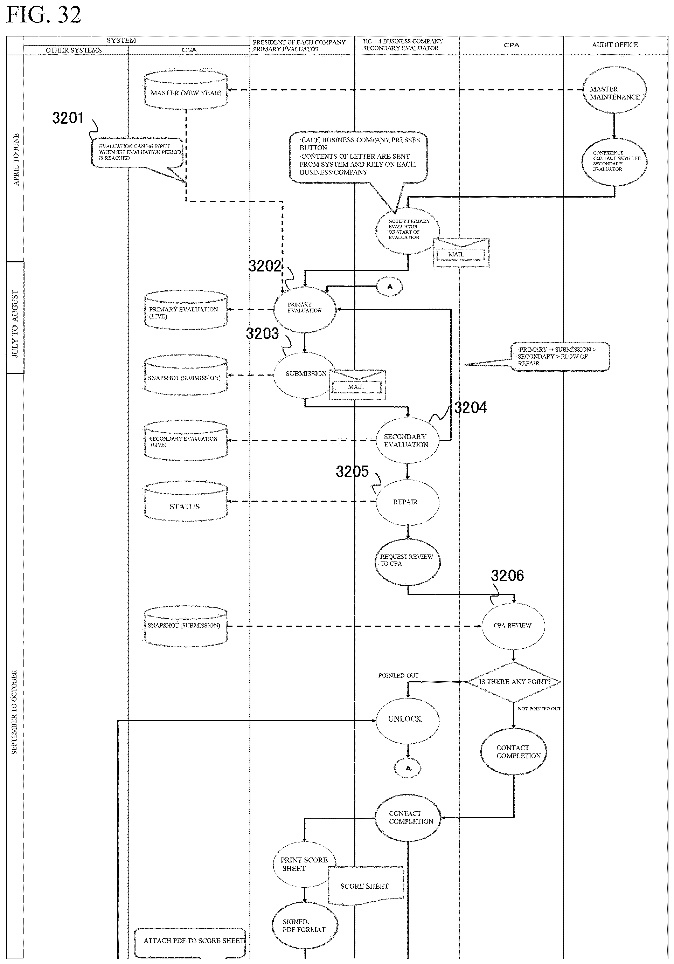

Next, the flow of audit will be described with reference to Fig. 32. In the system of this example, the information about suitability for items relating to internal audit can be input from the terminal throughout the year (3201). Next, at a predetermined time, the primary evaluator evaluates the information about suitability for items relating to the internal audit (3202) . The primary evaluation corresponds to the evaluation in the assessment sheet described above. Next, the primary evaluation result is "submitted" (3203), and the assessment sheet at that time is fixed as a snapshot and stored in the main system. Next, the secondary evaluator makes an evaluation (3204). As a result of the secondary evaluation, if it is good, it is "accepted" (3205). Next, the information is reviewed by an external certified public accountant (CPA) (3206).

In the above, it was described that the evaluation is described at a predetermined time. This is due to the fact that J-SOX and the like, which conducts the internal audit, is obliged to submit a report once a year due to the corresponding work burden and the correspondence with the fiscal year, and the internal audit is based on one conducted once a year at a predetermined time. In other words, in the internal audit, various matters such as deficiencies, improvements, and more favorable conditions are pointed out regarding the state or execution of each part in the organization. Each department needs to respond to such indications, but if a response work for submitting a report once a year is insufficient, the timing of each response will be decided in relation to the submission timing. In other words, as a means to satisfy the conditions stipulated by a law of submitting a report, from the viewpoint of reducing the burden of responding to internal audits, it is sufficient to conduct an internal audit once to prepare the report once a year and it is sufficient to perform the work corresponding to the internal audit once a year. Although the roll forward described below was carried out separately as an auxiliary one, since it is a fragmentary internal audit work, not an internal audit work for the whole, as a general rule, it is considered in the business world that it is a considerable burden to perform tasks that correspond to internal audits more than twice a year (or, more than three times a year even considering partial audit work such as roll forward).

On the other hand, the inventor considers that it is desirable to promptly respond to newly formulated laws, changed laws, changes to social conditions, and the like, and constructs an example of the predetermined system described in the present document, and as a result, it is found that it does not necessarily cause a great burden. That is, the information about suitability for items relating to internal audit may be input from the terminal throughout the year. More specifically, the information about suitability, including trails, can be input from the terminal always (or at any time), and the system in this case may be configured to acquire the information. As mentioned above, it may be a concept excluding outages such as system maintenance and improvement throughout the year or always (or at any time). In short, the user can input the information about suitability regardless of the time when the information about suitability is calculated back from the submission time of the audit report, and the system of this example may acquire the information. On the other hand, it may be inconvenient if the information about suitability to be audited by the auditor is changed by inputting by the user. Therefore, the system of this example has a storage unit A that stores information about suitability input by the user and acquired by the system of this example, and a storage unit B that stores information about suitability that the auditor uses as an audit target, in which the information about suitability input from the user throughout the year may be stored in the storage unit A, and the information in the storage unit A may be duplicated in the storage unit B at a predetermined time. This configuration allows the user to input the information about suitability throughout the year, whereas the auditor can conduct the audit using the information about suitability that is fixed at a given time and is not changed by subsequent input of user information. Note that the fact that the information is not changed by the subsequent input of the user's information does not include rollback. The rollback may be performed on the information about suitability that has been established at a given time.

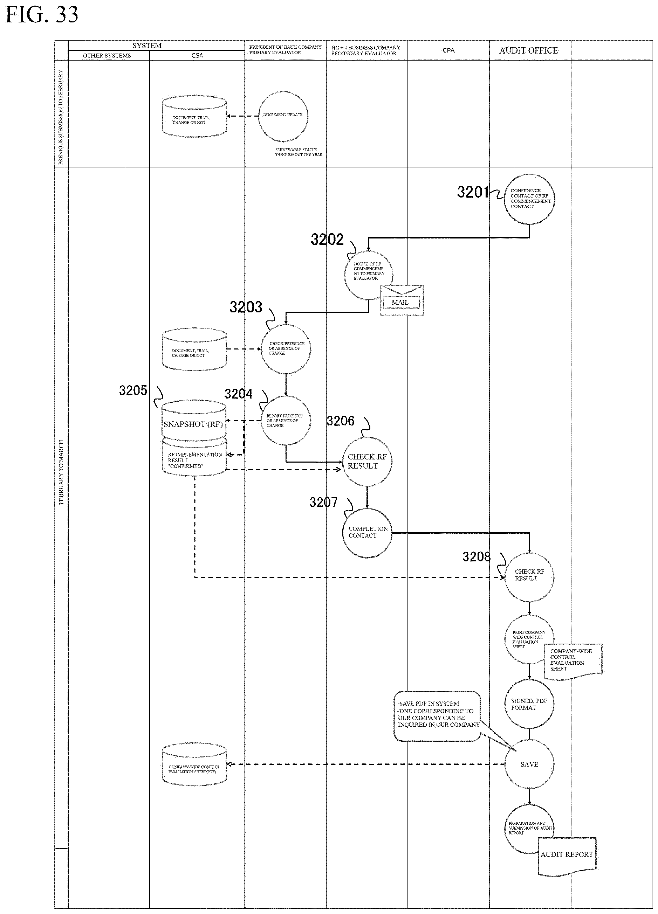

Next, the flow of the roll forward (sometimes abbreviated as RF) after the audit will be described with reference to Fig. 33. The roll forward is a business that reflects changes in the gap in the business results of the internal audit when there is a time gap between the timing of the internal audit conducted once a year and the reporting date. In February, which is the time for the roll forward, the contact at which the roll forward is performed is contacted from the audit office to the secondary evaluator (3201) and is further contacted the primary evaluator (3202). The primary evaluator confirms the presence or absence of changes (3203), evaluates the changed parts, reflects the results (3203), and reports the results to the secondary evaluator (3204). Here, the contents may be finalized as a snapshot (3205). The secondary evaluator evaluates and confirms the changed part or a part thereof as necessary (3206), and performs the completion report to the audit office (3207), and the roll forward result is confirmed in the audit office (3208).

In the roll forward described above, when the primary evaluator confirms whether or not there is a change (3203), the primary evaluator is required to check all whether the user has updated the trail. At that time, in the case of a configuration in which the trails of each item are checked in order for the trails of each item in each document, it may be a burden because there are many items.

Therefore, the system of this example may be configured so that only the part where the trail has been updated is selected and displayed as a list as compared with the part confirmed last time. By displaying only the updated part in a list, the auditor can efficiently check the part. More specifically, the system of this example may include
a specification unit that specifies information about suitability for an item relating to an internal audit acquired after a predetermined time point, and
a display unit that displays the specified information about the terminal relating to the first audit division.

Here, the predetermined time point may be a time point at which the primary evaluator targets the information about suitability at the time of the audit before the roll forward. This is because the subsequent update is updated in the roll forward.

In addition, the specification unit may specify information about suitability for items relating to internal audit acquired after a predetermined time by using a database including information about the date and time when the information about suitability is updated. For example, the system of this example may have a database that combines and stores the stored trail and the update date/time information in association with each CP code. In this way, for example, if the latest update date and time is compared with a predetermined time point, and the latest update date and time is later than the predetermined time point, it is specified as the information about suitability changed after the predetermined time point.

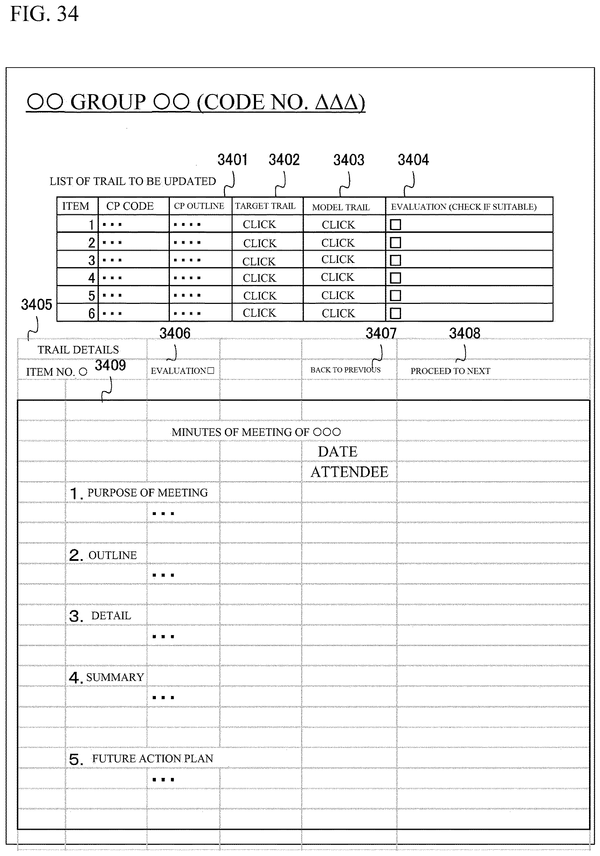

Further, the specified information may be transmitted to the terminal relating to the first audit division, and may be displayed so that the specified information can be viewed on the terminal relating to the first audit division. For example, as illustrated in Fig. 34, as the updated trail, the information indicating the specified information is displayed in a list, and when each specified information is specified by clicking, and the like, the information about suitability, for example, trails as each specified information may be viewed. In Fig. 34, a list of trails to be updated is displayed for the audited company. The list may be a part or all of the list of trails to be updated. Since the trail is associated with the CP, the summary of the CP may be displayed so that the purpose of the trail to be evaluated can be understood (3401). In addition, since the target trail may be large data, for example, the trail may be viewed (3409) in the trail details 3405 by clicking (3402). In addition, it is convenient for viewers to be able to prepare and view model trails such as the original appearance. Therefore, the model trail may be viewed on a separate screen by clicking (3403). When the evaluation after viewing the trail is suitable, for example, a check mark and the like may be entered (3404) (3406). In addition, the previous and next items may be clicked so that the items to be updated can be viewed in order (3407) (3408). The model trail may also be displayed so that it can be compared on the same screen as the trail to be evaluated instead of another screen. In this case, the viewer can compare the trail to be evaluated with the model trail, and can easily confirm the suitability of the trail. Also, the model trail may be the same as or different from the example in the model book described above. In addition, the model trail may also illustrate both the suitable and non-suitable examples. In addition, the information to be noted in the audit may be displayed.

In the above configuration, the update part at the time of roll forward is displayed, but when there are many update locations, there is a possibility that the evaluation may not be completed in a short period of time when the roll forward is performed. In particular, when the roll forward is set in a short period of time or when there are many change locations, the work of the evaluator can become excessive. Therefore, the audit at the time of the roll forward may be configured to display items and/or trails relating only to locations pointed out to be inadequate in the initial audit. More specifically, the system of this example may include
a specification unit that specifies information about suitability for an item required to pass the audit which is the information about the suitability for the item relating to the internal audit acquired after a predetermined time point, and
a display unit that displays the specified information about the terminal relating to the first audit division.

Here, for each principle/operation, the items required to pass the audit may be items relating to the checkpoint relating to the level required to conform the pass level in the lower principle/operation in the case where the pass level according to the classification to which each company belongs is compared with the level at the aforementioned predetermined time point and the level at the aforementioned predetermined time point is lower than the pass level. By limiting the target to be specified in this way, the target to be evaluated is limited, and the evaluation can be easily performed in a short period of time for the roll forward.

On the other hand, when the state of the corporate internal audit is strengthened and most corporate internal audits have reached the pass level, the number of audit targets during the roll forward should be reduced. In addition, when the internal audit is a criterion for judging whether or not it is a pass level, it becomes a factor that lowers the incentive for the person in charge who aims for higher control. Therefore, when the trail is updated for items that may change the level relating one of the principle/operation, the evaluation may be conducted, and even when the trail is updated for items that cannot change the level relating to one of the principle/operation, the evaluation may not be conducted. More specifically, the system of this example may include
a specification unit that specifies information about suitability for an item that affects a change in one level of a principle or an operation which is the information about the suitability for the item relating to the internal audit acquired after a predetermined time point, and
a display unit that displays the specified information about the terminal relating to the first audit division.

For example, it is assumed that when three items 1 to 3 are suitable, the level of the principle to which the item belongs increases by 1. In addition, it is also assumed that items 1 and 2 are suitable at the aforementioned predetermined time point. At this time, when both the items 1 and 2 are updated, if both the items 1 and 2 are suitable, the level of the principle increases by 1, so the item 1 and the item 2 are items that affect the change in the level relating to the principle/operation. On the other hand, when the item 1 is updated, the level of the principle does not increase by 1 because the item 2 remains non-suitable while only the item 1 is suitable. Therefore, in this case, the item 1 is not an item that affects the change in level relating to one of the principle/operation. With the above configuration, it is possible to reduce the burden on the primary evaluator during the roll forward while improving the incentive for the person in charge.

In the above, the predetermined time point may be based on the date and time when the trail is recognized last time. Although the trail has been described above, the same may be applied to the information about suitability for the items relating to the internal audit instead of the trail. Further, the above evaluator may be a primary evaluator or a secondary evaluator. Therefore, the group to which the first audit division belongs may be the same as the group to which the auditee who uses the terminal relating to the first division belongs, and the group that controls the decision-making body of the group to which the auditee belongs.

Next, the case where the items relating to the internal audit are changed will be described. In the internal audit, the items subjected to the internal audit will be changed to reflect enforcement of a new law, revision of a law, change in rules, change in an operation system, occurrence of social incidents or appearance of risks, and the like. If such changes are made in connection with the submission of a report on the internal audit once a year, it will often result in fulfillment of legal obligations for certain corporate, but it is preferable to take early action from the perspective of reducing corporate risk.

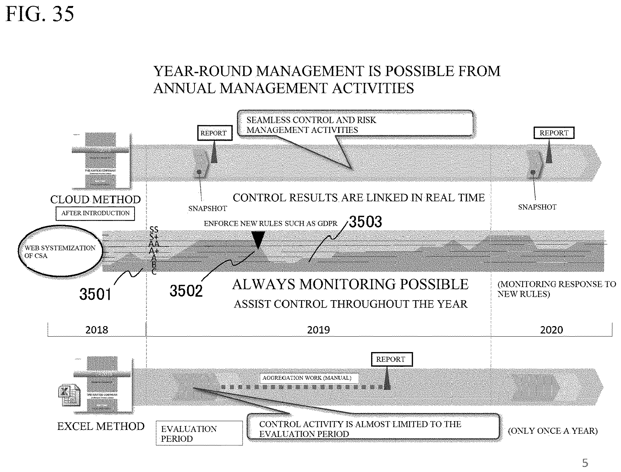

Fig. 35 shows an example of activities that can manage risk throughout the year, but it also shows an example of changes in items relating to the internal audit. Specifically, the evaluation 3501 shows the evaluation of each company, and is C, B, A, A+, AA, S+, and SS in order from the bottom. This graph illustrates the temporal transition of the evaluation of a certain corporate. The evaluation has dropped in the enforcement of new rules such as GDPR (3502). This means that as a result of changing the item of the internal audit based on the enforcement of the new rules, the information about suitability for the item of the internal audit is not input, and therefore, the evaluation has dropped. However, the subsequent evaluation has increased (3503), which indicates that the auditee has responded to the changed item, and thus, the information about suitability is input and the level of the item has increased.

As described above, the system of this example may provide this information to the audited side when the items relating to internal audit are changed so that the system of this example can respond to the change in items relating to the internal audit. Here, even if the item relating to the internal audit is added, it may be included when the item relating to the internal audit is changed.

That is, the system of this example may be an internal audit support system, in which
when the items relating to the internal audit are changed,
the display unit in the terminal relating to the first division can display the information about the change.

The information about the change may be the changed content or may mean that the change has been made. In addition, such information may be displayed on the terminal relating to the first division, and the transmission mode of the information may be a mode that may be contacted as a contact matter in the application relating to this system, or send an e-mail to a person in charge relating to the terminal in cooperation with mail software. Since the display unit on the terminal relating to the first division can display the information about the change, the auditee relating to the first division can easily and quickly understand the change, and is highly likely to respond promptly, so it is possible to more strength the internal control.

In addition, the system of this example may be an internal audit support system, in which
the main system includes a judgment unit that judges whether to acquire the information about suitability for the change, and
when the judgment unit judges that the information about suitability for the change is not acquired at a predetermined time, the display unit in the terminal relating to the first division can display the information indicating that the information about suitability for the change is not acquired.

The predetermined time point may be set at the time when the new item is set, or may be the end of a predetermined period starting from the time when the new item is set. A person who sets a new item may set the predetermined time point as temporal information, or a reference period may be set in advance in the system and the reference period may be applied and set.

In addition, the predetermined time point may be acquired from the terminal relating to the first division. A user who uses the terminal relating to the first division sets a deadline by himself/herself. By setting a reminder as the user's own schedule management, it becomes easier to respond more voluntarily.

The information indicating that the information about suitability for the change is not acquired may, for example, indicate that the information is not acquired, and may be indicated in a state in which a location where the information is not acquired is different from a location where other information is acquired, and the location where the information is acquired by displaying the location where the information is not acquired may not be displayed. Such information may be displayed on the terminal relating to the first division, and the transmission mode of the information may be a mode that may be contacted as a contact matter in the application relating to this system, or send an e-mail to a person in charge relating to the terminal in cooperation with mail software.

In the case where the judgment unit judges that the information about suitability for the change is not acquired at a predetermined time point, when the display unit in the terminal relating to the first division displays the information indicating that the information about suitability for the change is not acquired, the auditee relating to the first division will be able to notice the change and will be more likely to respond promptly, so it is possible to more strengthen the internal control.

In addition, the audit division may be notified that there is no response about the change taken. That is, the system of this example may be an internal audit support system, including:
a judgment unit that judges whether to acquire the information about suitability for the change, and
in which when the judgment unit judges that the information about suitability for the change has not been acquired at a predetermined time point, the display unit in the terminal relating to the first division can display the information indicating that the information about suitability for the change is not acquired.

When the judgment unit judges that the information about suitability for the change is not acquired at a predetermined time point, the display unit in the terminal relating to the first audit division can display that the information about suitability for the change is not acquired, so the auditor relating to the first audit division can easily and quickly understand that the change has not been made and the auditee can quickly respond to the change by the inquiry to the auditee, and the like, thereby making it possible to more strengthen the internal control.

In addition, when a company that has a corporate group such as a subsidiary company conducts an audit on the corporate group, it is preferable to be able to quickly understand what percentage of each subsidiary company belonging to the corporate group is responding to the change. Therefore, the system of this example may be configured so that each subsidiary company belonging to the corporate group can display the status of responding to the changes in the items of the internal audit. That is, the system of this example may be an internal audit support system, in which
the first audit division belongs to the first group, and
the main system includes the second judgment unit that judges whether to acquire the information about suitability for the change, for each group having a decision-making body that can be controlled by the first group,
the display unit in the terminal relating to the first audit division can display the information about the determination for each group having a decision-making body that can be controlled by the first group.

The information about the judgment may be, for example, a total score of the audit result that is realized by acquiring the information or a level relating to the change that is realized by acquiring the information when the information about suitability for the change is acquired, and a total score of the audit result in the state in which the information is not acquired or a level relating to the change in a state in which the information is not acquired when the information about the suitability relating the change is not acquired. In addition, the information about the judgment may be the information that the information about suitability for the change is acquired/not acquired, the information that the change is responded/not responded, and the information that the change is required to be responded/not to be responded, and the like.

In addition, regarding the information about suitability for the change, the information about the audited result by the first audit division or the like may be displayed. The information about the audited result may be information to which the audited information is added, or may be a level of each principle/operation level relating to the change of the audited result or a total score based on the change in the audited results. By the configuration that displays the information about the audited result, the reliable audit results are displayed that not only indicate whether the audited division responded to the change, but also take into account the audit results by the audited division, which indicates whether the audited division responds appropriately, and the viewer can make more specific judgment to strengthen the internal audit.

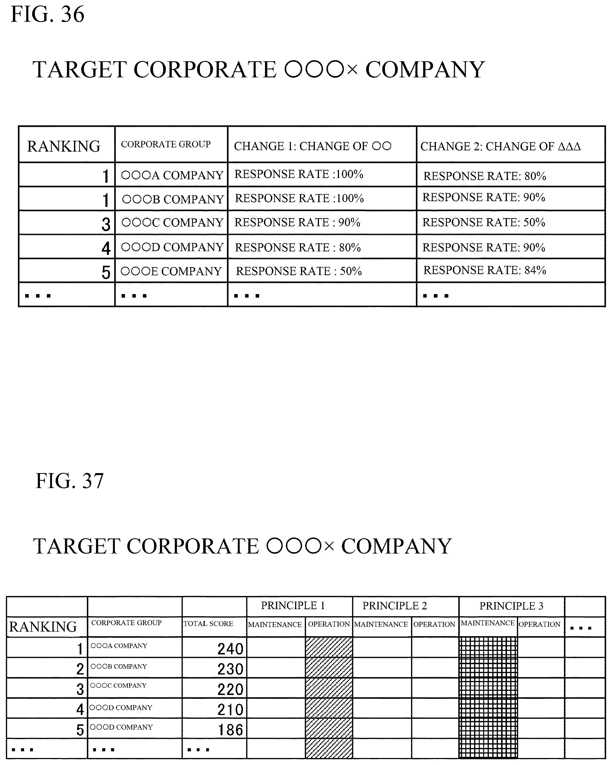

Here, an example of the display on the terminal will be described with reference to Fig. 36. Fig. 36 is an example of the display screen of the terminal used by the auditor belonging to oooX company. When oooX company has oooA to oooE companies as a corporate group, and there is a change in items relating to the internal audit, a response rate that each company responded to the change is displayed. The response rate may be calculated and displayed as the percentage at which the system of this example acquires the information about suitability for the change, assuming that the pass of the suitability is set to be 100%. Note that by setting the case where all the information about suitability for the change is acquired by the system of this example to 100%, the system of this example may calculate and display the percentage that the information about suitability for the change is acquired.

In addition, the number of changes may be not limited to one, but may be plural, and one or a plurality of changes may be displayed. Fig. 36 illustrates a display example of two changes. Then, in Fig. 36, of the two changes, change 1 is an example of aligning the ranking. Note that in Fig. 36, the corresponding percentages may be displayed in descending order, but the corresponding percentages may be displayed in ascending order.

With the above configuration, the viewer can display a list of the efforts of each company regarding each change.

Also, in particular, when the responding percentages are displayed in ascending order, companies that do not respond may draw the viewer's attention. The existence of such a system motivates each company to respond quickly to changes.

In addition, the configuration may be made such that the response to the change is focused on and displayed, but the configuration may be made such that the comprehensive response including the response to the change is displayed. Fig. 37 is an example of the display screen of the comprehensive evaluation of each company, including the status of the response to changes on the auditor's terminal. Similar to the above, the corporate group relating to the target corporate oooX company is displayed as a list. Here, the total score for audit is displayed, and in Fig. 37, the total score is displayed in descending order. Here, the total score may be displayed in ascending order. In the case of ascending order, the company with the lowest total score is displayed, so the existence of such a system motivates each company to attach importance to the responding work to the internal audit. In addition to the total score, the maintenance of 17 principles, the operation of 17 principles, each principle, the maintenance within each principle, or the operation within each principle may be aligned in ascending or descending order. As a result, the viewer can align the viewpoints and understand the order of each viewpoint. In addition, in Fig. 37, the operation of principle 1 and the maintenance of principle 3 are displayed with patterns. In this way, by displaying the changed part in a form different from other parts such as a pattern, the changed part may be displayed in a conspicuous manner. In this case, the viewer can align the changed locations in particular and understand the response status regarding the changed locations.

Note that the screen in Fig. 37 is based on the premise that the system of this example has a configuration relating to changes, but even if the system does not have a configuration relating to changes, as in Fig. 37, the terminal can display the comprehensive evaluation of each company. In addition, such a display may be configured to be displayed on a terminal relating to an auditor of a company having a corporate group. Since the system of this example can display the ranking of each company on the terminal using the comprehensive evaluation of each company, the viewer can easily perform the evaluation based on the ranking. For example, when displayed in descending order, it becomes easier for the viewer to grasp the response to the internal audit in a preferable order, and when displayed in ascending order, the viewer can easily grasp the response to the internal audit in an inappropriate order.

It goes without saying that the invention examples described in the embodiment of the present application are not limited to those described in the specification of the present application, and can be applied to various examples within the scope of the technical idea. For example, in the embodiment of the present specification, the information presented on the screen of the information processing apparatus such as a terminal can be transmitted to other information processing apparatuses so as to be displayed on the screen of the other information processing apparatuses, so the system of each embodiment may be configured. In addition, the system of each embodiment may include a transmitting unit so that it can be transmitted to other information processing apparatuses. In addition, the system of this example may be the main system when it does not include the terminal used by the auditor or the auditee. When the information is transmitted to the terminal, it may be transmitted when there is a request for transmission of the information from the terminal, or it may be transmitted when there is no request for transmission of the information from the terminal. By transmitting when there is a request, there is an advantage that it is not necessary to store unnecessary information in the terminal relating to the first audit division. By transmitting when there is no request, there is an advantage that there is no temporal delay relating to communication. In addition, in the presented configuration described above, the information may be displayed on the screen or may be shown by voice or the like. In addition, the system described in the examples of the present specification is not limited to the maintenance/operation of each principle, and may be used for other principles, provisions, regulations, and the like relating to other internal control.

In addition, the processes and procedures described herein can be realized not only by those explicitly described in the embodiments, but also by software, hardware, or a combination thereof. In addition, the processes and procedures described in the present specification can be implemented as computer programs and executed by various computers. In addition, the computer programs can be recorded on a non-transitory recording medium. The recording medium may be a computer-readable recording medium.

## Claims

1. An internal audit support system, comprising: a terminal that is relating to a first division that undergoes an internal audit; a terminal that is relating to a first audit division belonging to a first group performing the internal audit of the first division; and a main system that is connectable to the terminal relating to the first division and the terminal relating to the first audit division through a network, wherein
the terminal relating to the first division includes
a display unit that displays an item relating to the internal audit, and
an input unit that inputs information about suitability for the item,
the main system includes
a storage unit that stores the information in association with the item, and
a first determination unit that determines one of a plurality of indicators indicating a degree of control for a major item including one or a plurality of items by using the information, and
the terminal relating to the first audit division includes
a display unit that displays the one determined indicator.

2. The internal audit support system according to claim 1, wherein
the first division belongs to a second group, and
the first group is a group that controls a decision-making body of the second group.

3. The internal audit support system according to claim 1 or 2, wherein
the main system includes a first judgment unit that judges suitability for a first item by using information about suitability for a first sub-item which is a sub-item of the first item relating to the internal audit, and
the first judgment unit judges information about suitability for a second item different from the first item by using the information about the suitability for the first sub-item.

4. The internal audit support system according to any one of claims 1 to 3, wherein
the display unit of the terminal relating to the first audit division displays information about a controlled group having a decision-making body controlled by the first group while ranking the controlled group.

5. The internal audit support system according to any one of claims 1 to 4, wherein
the display unit of the terminal relating to the first audit division displays statistical information about the controlled group having the decision-making body controlled by the first group.

6. An internal audit support system, comprising:
a first transmitting unit that transmits information for displaying an item relating to an internal audit to a terminal relating to a first division that undergoes an internal audit;
a first receiving unit that receives information about suitability for the item from a terminal relating to the first division;
a storage unit that stores the information in association with the item;
a first determination unit that determines one of a plurality of indicators indicating a degree of control for a major item including one or a plurality of items by using the information; and
a second transmitting unit that transmits information for displaying the one determined indicator to the terminal relating to a first audit division belonging to a first group performing the internal audit of the first division.

7. The internal audit support system according to claim 6, wherein
the first division belongs to a second group, and
the first group is a group that controls a decision-making body of the second group.

8. The internal audit support system according to claim 6 or 7, further comprising:
a first judgment unit that judges suitability for a first item by using information about suitability for a first sub-item which is a sub-item of the first item relating to the internal audit, wherein
the first judgment unit judges suitability for a second sub-item different from the first item by using the information about the suitability for the first sub-item.

9. The internal audit support system according to any one of claims 6 to 8, wherein
the second transmitting unit transmits information for displaying a controlled group having a decision-making body controlled by the first group while ranking the controlled group to the terminal relating to the first audit division.

10. The internal audit support system according to any one of claims 6 to 9, wherein
the second transmitting unit transmits statistical information about the controlled group having the decision-making body controlled by the first group to the terminal relating to the first audit division.

11. The internal audit support system according to claim 6, wherein
the first division belongs to the first group,
the internal audit support system further includes a calculation unit that calculates a control risk calculated using information about suitability for the item relating to the internal audit, a frequency, and an influence degree, and
the second transmitting unit transmits the control risk to the terminal relating to the first audit division.

12. The internal audit support system according to any one of claims 6 to 11, wherein
when the group having the decision-making body controlled by the first group is a third group, the second transmitting unit transmits statistical information about the group having the decision-making body controlled by the third group to the terminal relating to the first audit division.

13. The internal audit support system according to any one of claims 6 to 12, wherein
a second audit division performs an audit for the first division, and
the internal audit support system further includes a third transmitting unit that transmits the information stored in the storage unit to the terminal relating to the second audit division different from the terminal relating to the first audit division.

14. The internal audit support system of any one of claims 6 to 13, wherein
when an item relating to the internal audit is changed,
the first transmitting unit transmits information about the change to the terminal relating to the first division.

15. The internal audit support system of claim 14, further comprising:
a second judgment unit that judges whether to acquire information about suitability for the change, wherein
when the second judgment unit judges that the information about suitability for the change is not acquired at a predetermined time point, the first transmitting unit transmits information indicating that the information about suitability for the change is not acquired to the terminal relating to the first division.

16. The internal audit support system according to claim 14 or 15, further comprising:
a second judgment unit that judges whether to acquire information about suitability for the change, wherein
when the second judgment unit judges that the information about suitability for the change is not acquired at a predetermined time point, the second transmitting unit transmits information indicating that the information about suitability for the change is not acquired to the terminal relating to the first audit division.

17. The internal audit support system according to any one of claims 14 to 16, further comprising:
a second judgment unit that judges whether to acquire the information about suitability for the change, for each group having a decision-making body controlled by the first group, wherein
the second transmitting unit transmits the information about the judgment displayed on each group having the decision-making body controlled by the first group to the terminal relating to the first audit division.

18. The internal audit support system according to any one of claims 6 to 17, further comprising:
a specification unit that specifies information about suitability for the item relating to an internal audit acquired after a predetermined time point, wherein
the second transmitting unit transmits the specified information to the terminal relating to the first audit division.

19. The internal audit support system according to any one of claims 6 to 17, further comprising:
a specification unit that specifies information about suitability for the item required to pass the audit which is the information about suitability for the item relating to the internal audit acquired after a predetermined time point, wherein
the second transmitting unit transmits the specified information to the terminal relating to the first audit division.

20. The internal audit support system according to any one of claims 6 to 17, further comprising:
a specification unit that specifies information about suitability for the item that affects a change in one level of a principle or an operation which is the information about suitability for the item relating to the internal audit acquired after a predetermined time point, wherein
the second transmitting unit transmits the specified information to the terminal relating to the first audit division.

21. An internal audit support method,
in an internal audit support system including a terminal that relates to a first division that undergoes an internal audit, a terminal that relates to a first audit division belonging to the first group performing the internal audit of the first division, and a main system that is connectable to the terminal relating to the first division and the terminal relating to the first audit division through a network, comprising:
by the terminal relating to the first division, a step of displaying, an item relating to the internal audit, and
a step of receiving information about suitability for the item;
by the main system, a step of storing the information in association with the item, and
a step of determining one of a plurality of indicators indicating a degree of control for a major item including one or a plurality of items by using the information; and
by the terminal relating to the first audit division, a step of displaying the one determined indicator.

22. The internal audit support method according to claim 21, wherein
the first division belongs to the second group, and
the first group is a group that controls a decision-making body of the second group.

23. The internal audit support method according to claim 21 or 22, further comprising:
by the main system, a step of using information about suitability for a first sub-item which is a sub-item of a first item when judging the suitability for the first item relating to an internal audit; and
a step of using the information about the suitability for the first sub-item when judging suitability for a second item different from the first item.

24. The internal audit support method according to any one of claims 21 to 23, further comprising:
a step of displaying, by the terminal relating to the first audit division, information about a controlled group having a decision-making body that is controlled by the first group while ranking the controlled group.

25. The internal audit support method according to any one of claims 21 to 24, further comprising:
a step of displaying, by the terminal relating to the first audit division, statistical information about a controlled group having a decision-making body that is controlled by the first group.

26. The internal audit support method according to claim 21, wherein
the first division belongs to the first group, and
the internal audit support method further includes a step of calculating, by the main system, a control risk calculated by using the information about suitability for the item relating to the internal audit, a frequency, and an influence degree, and
a step of displaying, by the terminal relating to the first audit division, the control risk.

27. The internal audit support method according to any one of claims 21 to 26, further comprising:
a step of displaying, by the terminal relating to the first audit division, statistical information about a group having a decision-making body that is controlled by a third group, when the group having the decision-making body that is controlled by the first group is defined as the third group.

28. The internal audit support method according to any one of claims 21 to 27, wherein
the second audit division performs an audit on the first division, and
the internal audit support method further includes a step of displaying, by the terminal relating to the second audit division different from the terminal relating to the first audit division, the information stored in the storage unit.

29. The internal audit support method according to any one of claims 21 to 28, further comprising:
a step of displaying, by the terminal relating to the first division, information relating to change when the items relating to the internal audit are changed.

30. The internal audit support method according to claim 29, further comprising:
a step of judging, by the main system, whether to acquire the information about suitability for the change; and
a step of displaying, by the terminal relating to the first division, the information indicating that the information about suitability for the change is not acquired when it is judged that the information about suitability for the change is not acquired at a predetermined time point.

31. The internal audit support method according to any one of claims 29 or 30, further comprising:
a step of judging, by the main system, whether to acquire the information about suitability for the change; and
a step of displaying, by the terminal relating to the first audit division, that the information about suitability for the change is not acquired when it is judged that the information about suitability for the change is not acquired at a predetermined time.

32. The internal audit support method according to any one of claims 29 to 31, further comprising:
a step of judging, by the main system, whether to acquire the information about suitability for the change, for each group having a decision-making body that is controlled by the first group, and
a step of displaying, by the terminal relating to the first audit division, the information relating to the judgment for each group having a decision-making body that is controlled by the first group.

33. The internal audit support method according to any one of claims 21 to 32, further comprising:
a step of specifying, by the main system, information about suitability for an item relating to an internal audit acquired after a predetermined time point; and
a step of displaying, by the display unit in the terminal relating to the first audit division, the specified information.

34. The internal audit support method according to any one of claims 21 to 32, further comprising:
a step of specifying, by the main system, information about suitability for an item required to pass the audit which is the information about suitability for the item relating to the internal audit acquired after a predetermined time point; and
a step of displaying, by the terminal relating to the first audit division, the specified information.

35. The internal audit support method according to any one of claims 21 to 32, further comprising:
a step of specifying, by the main system, information about suitability for an item that affects a change in one level of a principle or an operation which is the information about suitability for the item relating to the internal audit acquired after a predetermined time point; and
a step of displaying, by the terminal relating to the first audit division, the specified information.

36. A program causing a computer to function as the system according to any one of claims 1 to 20.
